# EUROPEAN PATENT SPECIFICATION

(11) **EP 4 374 523 B1**
(45) Date of publication and mention of the grant of the patent: **19.08.2026**
(21) Application number: 22751980.8
(22) Date of filing: 13.07.2022
(51) Int. Cl.: H04L 1/1829, H04B 7/02, H04L 5/00, H04W 72/11

(54) **TECHNIQUES FOR DEFERRING FEEDBACK UPON UPLINK CONTROL CHANNEL COLLISIONS**
VERFAHREN ZUR ZURÜCKSETZUNG VON FEEDBACK BEI UPLINK-STEUERKANALKOLLISIONEN
TECHNIQUES POUR LE REPORT D'UNE RÉTROACTION LORS DE COLLISIONS DE CANAL DE COMMANDE DE LIAISON MONTANTE

(30) Priority: 22.07.2021 GR 20210100496
(43) Date of publication of application: 29.05.2024
(73) Proprietor: QUALCOMM INCORPORATED, San Diego, California 92121-1714 (US)
(72) Inventor: DIMOU, Konstantinos, San Diego, California 92121-1714 (US); ZHOU, Yan, San Diego, California 92121-1714 (US); HOSSEINI, Seyedkianoush, San Diego, California 92121-1714 (US); HUANG, Yi, San Diego, California 92121-1714 (US); LUO, Tao, San Diego, California 92121-1714 (US)
(74) Representative: Bardehle Pagenberg Partnerschaft mbB Patentanwälte Rechtsanwälte
(86) International application number: PCT/US2022/073679
(87) International publication number: WO 2023/004244

(56) References cited:
- QUALCOMM INCORPORATED: "HARQ-ACK enhancement for IOT and URLLC", vol. RAN WG1, no. e-Meeting; 20210412 - 20210420, 7 April 2021 (2021-04-07), XP052177963, Retrieved from the Internet <URL:https://ftp.3gpp.org/tsg_ran/WG1_RL1/TSGR1_104b-e/Docs/R1-2103163.zip R1-2103163 HARQ-ACK enhancement for IOT and URLLC.docx> [retrieved on 20210407]

## Description

### FIELD OF TECHNOLOGY

The following relates to wireless communications, including techniques for deferring feedback upon uplink control channel collisions.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).
Document Qualcomm Incorporated: "HARQ-ACK enhancement for IOT and URLLC", 3GPP TSG RAN WG1 #104bis, R1- 2103163, e-Meeting, April 12-20, 2021 makes observations for HARQ-ACK feedback enhancement for Rel-17 IOT and URLLC. It is proposed to support "1-shot Enhanced Type 3 CB HARQ" for deferred SPS PUCCH HARQ bits, where enhancements refer to the flexibility and reconfiguration of Type 3 CB size.

### SUMMARY

The reader is referred to the appended independent claims. Some preferred features are laid out in the dependent claims.

The described techniques relate to improved methods, systems, devices, and apparatuses that support techniques for deferring feedback upon uplink control channel collisions. Generally, a user equipment (UE) may monitor for semi-persistent scheduling (SPS) transmissions and generate SPS hybrid automatic repeat request (HARQ) bits scheduled for transmission to the base station in a set of uplink symbols. However, a collision may occur if a physical uplink control channel (PUCCH) carrying the SPS HARQ bits overlaps with downlink symbols. In some examples, the UE may defer all SPS HARQ bits from collided PUCCHs to a next available PUCCH resource. In some examples, the UE may distribute deferred HARQ bits across multiple available PUCCH resources. The UE may distribute the deferred HARQ bits evenly across the next available PUCCH resources, or the UE may distribute the deferred HARQ bits unevenly according to a pattern. In some examples, the base station may indicate (e.g., via a downlink control information (DCI) message) a deferment pattern to the UE. The invention is defined by the independent claims.

### BRIEF DESCRIPTION OF THE DRAWINGS

FIG. 1 illustrates an example of a wireless communications system that supports techniques for deferring feedback upon uplink control channel collisions in accordance with aspects of the present disclosure.
FIG. 2 illustrates an example of a wireless communications system that supports techniques for deferring feedback upon uplink control channel collisions in accordance with aspects of the present disclosure.
FIG. 3 illustrates an example of a transmission scheme that supports techniques for deferring feedback upon uplink control channel collisions in accordance with aspects of the present disclosure.
FIG. 4 illustrates an example of a process flow that supports techniques for deferring feedback upon uplink control channel collisions in accordance with aspects of the present disclosure.
FIGs. 5 and 6 show block diagrams of devices that support techniques for deferring feedback upon uplink control channel collisions in accordance with aspects of the present disclosure.
FIG. 7 shows a block diagram of a communications manager that supports techniques for deferring feedback upon uplink control channel collisions in accordance with aspects of the present disclosure.
FIG. 8 shows a diagram of a system including a device that supports techniques for deferring feedback upon uplink control channel collisions in accordance with aspects of the present disclosure.
FIGs. 9 and 10 show block diagrams of devices that support techniques for deferring feedback upon uplink control channel collisions in accordance with aspects of the present disclosure.
FIG. 11 shows a block diagram of a communications manager that supports techniques for deferring feedback upon uplink control channel collisions in accordance with aspects of the present disclosure.
FIG. 12 shows a diagram of a system including a device that supports techniques for deferring feedback upon uplink control channel collisions in accordance with aspects of the present disclosure.
FIGs. 13 through 16 show flowcharts illustrating methods that support techniques for deferring feedback upon uplink control channel collisions in accordance with aspects of the present disclosure.

### DETAILED DESCRIPTION

In some wireless communication systems, a user equipment (UE) may be configured to monitor for semi-persistent scheduling (SPS) transmissions from a base station. Based on the monitoring, the UE may generate and transmit SPS feedback bits (e.g., hybrid automatic repeat request (HARQ) acknowledgment (ACK) messages or negative ACK (NACK) messages) associated with the SPS transmissions on a physical uplink control channel (PUCCH) according to an SPS configuration. For example, the SPS configuration may indicate that the UE is to transmit SPS HARQ bits in a first set of uplink symbols according to a timing offset from the received SPS transmissions (e.g., according to a first slot format). However, in some examples, changes in a slot format may result in the SPS feedback being scheduled for transmission during a symbol that has changed to be a downlink symbol. For instance, a base station may configure the UE to communicate according to a different slot format, such that slots that would have been uplink slots according to the first slot format are downlink slots according to the second slot format. Or, in some examples, flexible symbol of the first slot format may be designated as a downlink symbol. Although the techniques herein are described in the context of SPS HARQ ACK/NACK bits, it is to be understood that the techniques may also be applicable to transmission of other feedback bits, such as channel state information (CSI),other uplink control information (UCI), etc.

In some cases, the UE may communicate with the base station according to multiple active SPS configurations, meaning that the UE may be monitoring for and receiving multiple periodic transmissions. The UE may also report feedback for each SPS transmission via the PUCCH resource that is scheduled a certain number of symbols after receipt of one or more SPS signals. Feedback for the multiple SPS configurations may be provided during a single PUCCH instance, meaning that multiple bits of feedback will be scheduled for a single PUCCH instance.

In some examples, a UE may defer all SPS HARQ bits from collided PUCCHs to a next available PUCCH resource (e.g., into a next available PUCCH occasion after the received SPS transmission or the collided PUCCH). In such examples, the UE may transmit all of the deferred HARQ bits in the next available PUCCH resource.

In some examples, the UE may distribute deferred HARQ bits across multiple available PUCCH resources. For instance, the next available PUCCH resource after one or more collided PUCCHs may already carry existing, non-deferred UCI bits to be transmitted, and the UE may multiplex the deferred SPS HARQ bits and the non-deferred UCI bits in the next available PUCCH resource for transmitting. However, the uplink resources of the earliest available PUCCH resource may not accommodate all the SPS HARQ bits that have been deferred, which may overload the first available PUCCH resource. For example, if a candidate target slot already has existing, non-deferred UCI bits, it may not accommodate the non-deferred UCI bits and the deferred HARQ bits (e.g., the size of the feedback bits and UCI bits combined may be greater than an allocation size of the second set of uplink symbols). In some cases, the UE may defer multiple HARQ bits for multiple SPS configurations. In such examples, the uplink resources of the earliest available PUCCH resource may not accommodate all of the SPS HARQ bits that have been deferred. In such examples, the UE may distribute deferred HARQ bits across multiple next available PUCCH resources. In some examples, the UE may distribute the deferred HARQ bits evenly across the next available PUCCH resources. In some examples, the UE may distribute the deferred HARQ bits unevenly according to a pattern.

In some examples, the base station may indicate (e.g., via a downlink control information (DCI) message) a deferment pattern to the UE. For instance, the indication of the deferment pattern may indicate that the UE is to transmit all deferred HARQ bits in a next available PUCCH resource, or may indicate that the UE is to distribute the deferred HARQ bits evenly across multiple PUCCH resources, or that the UE is to distribute the deferred HARQ bits unevenly across multiple PUCCH resources (e.g., a certain portion or percentage of the deferred HARQ bits in a first available PUCCH resource, a different portion or percentage of the deferred HARQ bits in a second available PUCCH resource, etc.).

Aspects of the disclosure are initially described in the context of wireless communications systems. Aspects of the disclosure are further illustrated by and described with reference to wireless communications systems, transmission schemes, and process flows. Aspects of the disclosure are further illustrated by and described with reference to apparatus diagrams, system diagrams, and flowcharts that relate to techniques for deferring feedback upon uplink control channel collisions.

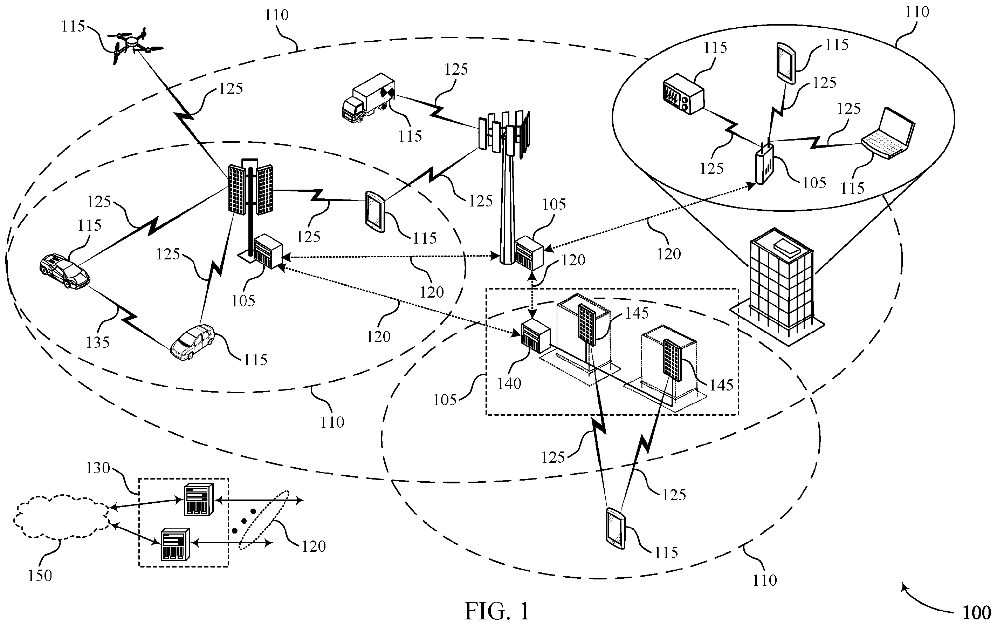

**FIG. 1** illustrates an example of a wireless communications system 100 that supports techniques for deferring feedback upon uplink control channel collisions in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ =* 1/(Δ*fₘₐₓ* · *N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally, or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may support synchronous or asynchronous operation. For synchronous operation, the base stations 105 may have similar frame timings, and transmissions from different base stations 105 may be approximately aligned in time. For asynchronous operation, the base stations 105 may have different frame timings, and transmissions from different base stations 105 may, in some examples, not be aligned in time. The techniques described herein may be used for either synchronous or asynchronous operations.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally, or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

In some examples, a UE may identify collisions between uplink HARQ bits associated with SPS transmissions and downlink symbols. The UE may defer all SPS HARQ bits from collided PUCCHs to a next available PUCCH resource. In some examples, the UE may distribute deferred HARQ bits across multiple available PUCCH resources. The UE may distribute the deferred HARQ bits evenly across the next available PUCCH resources, or the UE may distribute the deferred HARQ bits unevenly according to a pattern. In some examples, the base station may indicate (e.g., via a downlink control information (DCI) message) a deferment pattern to the UE.

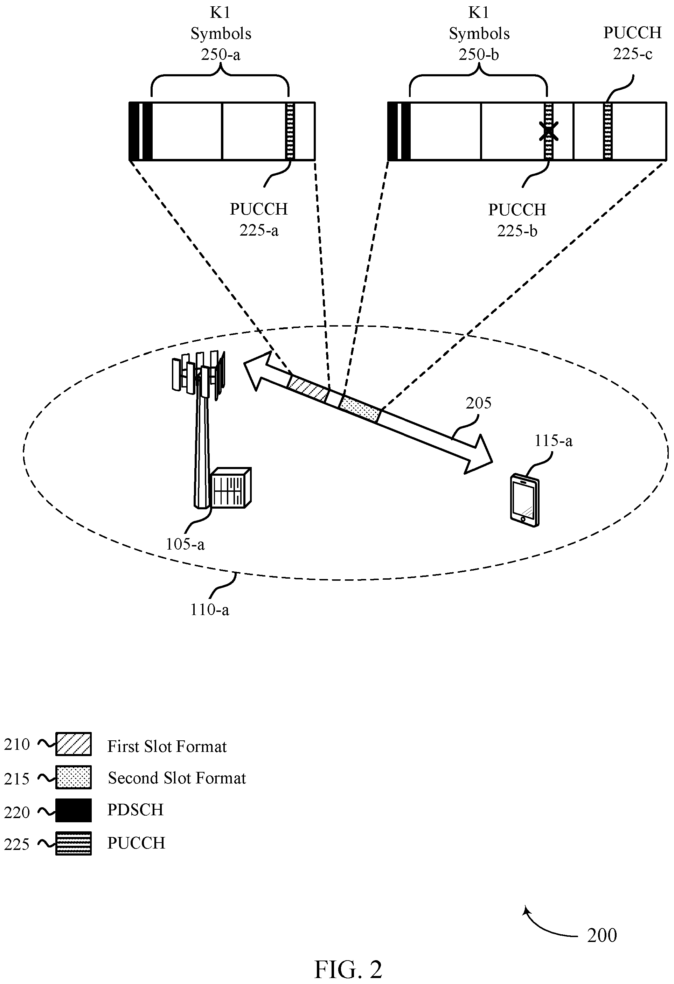

**FIG. 2** illustrates an example of a wireless communications system 200 that supports techniques for deferring feedback upon uplink control channel collisions in accordance with aspects of the present disclosure. In some examples, the wireless communications system 200 may implement aspects of the wireless communications system 100 or may be implemented by aspects of the wireless communications system 100. For example, the wireless communications system 200 may include a base station 105-a and a UE 115-a, which may be examples of corresponding devices described herein with reference to FIG. 1.

In some examples, the base station 105-a and the UE 115-a may communicate via a communications link 205 within a coverage area 110-a of the base station 105-a. The UE 115-a may monitor for SPS transmissions (e.g., from the base station 105-a), for example in a PDSCH 220, according to one or more SPS configurations. Based on the monitoring, the UE 115-a may generate SPS feedback bits (e.g., ACK/NACK bits) scheduled for transmission to the base station 105-a in a first slot format 210. The first slot format 210 may include a duration of K1 symbols 250-a, which may separate a PDSCH 220 and a corresponding PUCCH 225-a.

In some cases, such as in a second slot format 215, a PUCCH 225-b may conflict (e.g., collide) with downlink symbols (e.g., RRC configured downlink symbols) from the base station 105-a. For example, the base station 105-a may transmit control signaling (e.g., RRC signaling) that indicates resources for transmitting the PUCCH 225-b are configured for downlink transmissions, and so are no longer available for uplink transmissions. For instance, the RRC signaling may indicate a second slot format 215. A symbol that would be an uplink symbol in first slot format 210 may be a downlink symbol in second slot format 215. Or, a symbol that was previously a flexible symbol may be determined to be a downlink symbol. In either case, PUCCH 225-b may overlap at least partially with one or more downlink symbols, resulting in a collision between the one or more downlink symbols and the PUCCH 225-b for transmitting HARQ bits for one or more SPS transmissions. Because of the collision, the UE 115-a may defer SPS ACK/NACK bits scheduled for transmission in the PUCCH 225-b to one or more earliest slots that may accommodate the SPS ACK/NACK bits.

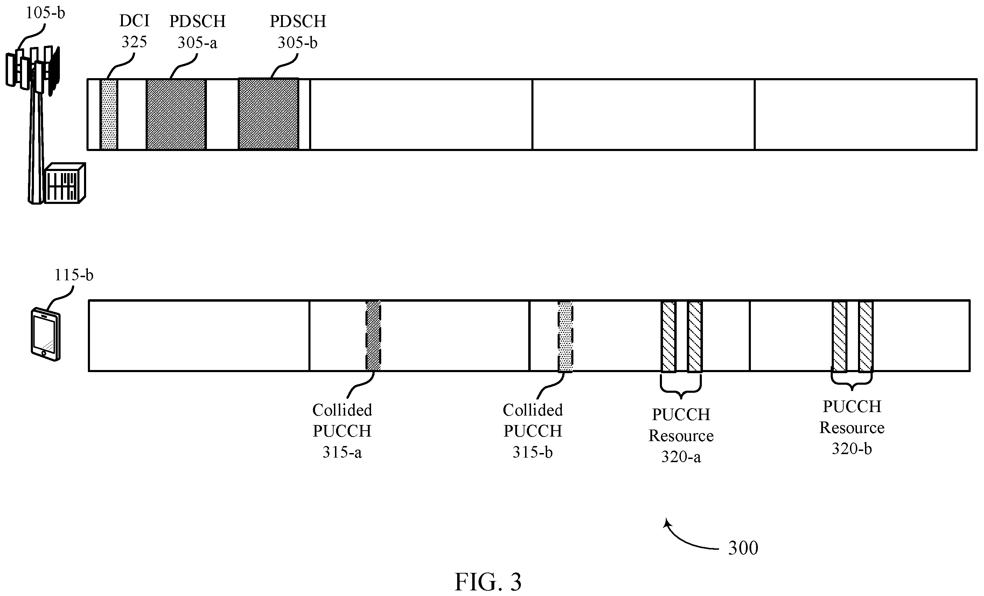

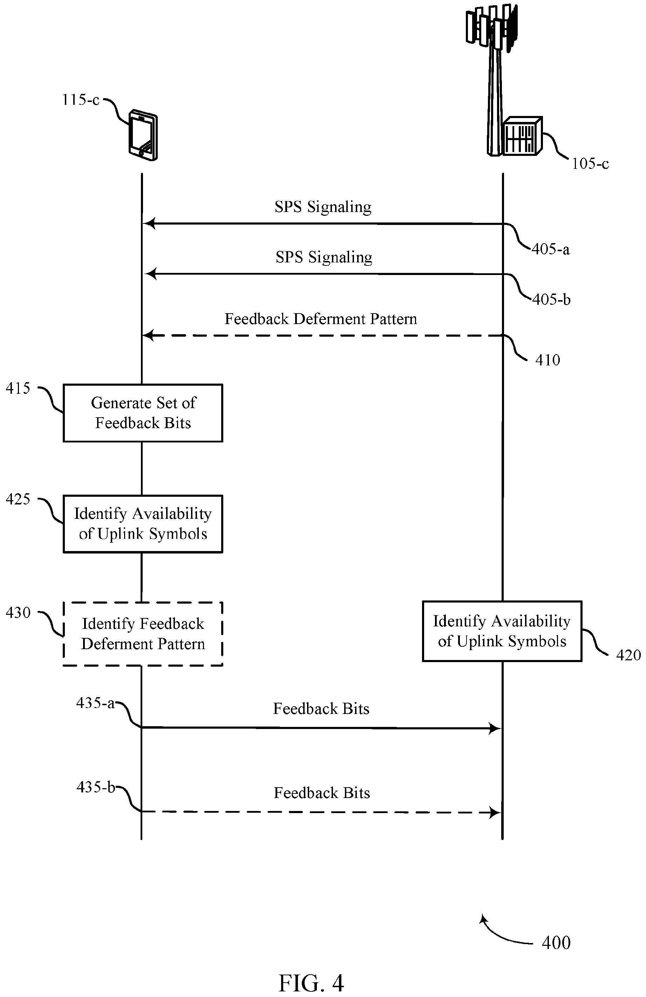

For example, the UE 115-a may defer HARQ bits from one or more collided PUCCHs 225-b, for transmission on next available PUCCH resources. In some examples, as described in greater detail with reference to FIGs. 3 and 4, the UE 115-a may transmit all deferred SPS HARQ bits in a next available PUCCH 225-c. However, in some examples, as described in greater detail with reference to FIGs. 3 and 4, the UE 115-a may distribute the deferred SPS HARQ bits across multiple PUCCH resources (e.g., PUCCH 225-c and a next available PUCCH 225). The UE 115-b may distribute the deferred SPS HARQ bits evenly or unevenly across the multiple available PUCCH resources (e.g., according to a pattern, which the base station 105-a may indicate based on channel conditions, traffic, congestion, one or more measurements, scheduling information, or the like). For example, if a number of deferred HARQ bits exceeds a threshold, or if UCI feedback bits are already scheduled for a next available PUCCH resource, then the base station 105-a may instruct the UE 115-a to distribute some (e.g., most) of the deferred HARQ bits to a subsequent available PUCCH resource. In some examples, as described in greater detail with reference to FIGs. 3 and 4, the base station 105-a may indicate, to the UE 115-a (e.g., via a DCI message), that the UE 115-a is to transmit all deferred SPS HARQ bits in a single available PUCCH resource, or that the UE 115-a is to distribute the deferred SPS HARQ bits across multiple available PUCCH resources. The UE may order or prioritize the distributed SPS HARQ bits according to one or more rules or prioritization schemes.

**FIG. 3** illustrates an example of a transmission scheme 300 that supports techniques for deferring feedback upon uplink control channel collisions in accordance with aspects of the present disclosure. In some examples, the transmission scheme 300 may implement aspects of the wireless communications systems 100 and 200 or may be implemented by aspects of the wireless communications systems 100 and 200. For example, the transmission scheme 300 may illustrate communications between a base station 105-b and a UE 115-b, which may be examples of corresponding devices described herein with reference to FIGs. 1 and 2. In some cases, a UE 115-b may implement techniques determining how to transmit deferred SPS feedback in a set of uplink symbols in accordance with transmission scheme 300.

In some examples, the base station 105-b and the UE 115-b may communicate via a communication link (e.g., communication link 205 as described with reference to FIG. 2). The UE 115-b may be configured to monitor for SPS transmissions from the base station 105-b. For example, the base station 105-b may transmit a PDSCH 305-a according to a first SPS configuration, which may be referred to as SPS config 1, and a PDSCH 305-b according to a second SPS configuration, which may be referred to as SPS config 2. In some cases, the UE 115-b may transmit SPS feedback (e.g., SPS ACK/NACK bits) for each PDSCH 305 via a corresponding PUCCH 315. In some cases, the SPS ACK/NACK bits may conflict (e.g., collide) with downlink symbols from the base station 105-b. For example, the collided SPS ACK/NACK bits may be carried on a collided PUCCH 315-a (e.g., for SPS config 1) or a collided PUCCH 315-b (e.g., for SPS config 2). The base station 105-b may transmit control signaling (e.g., RRC signaling) that indicates resources for transmitting the PUCCH 315-a and 315-b are configured for downlink transmissions, and so are no longer available for uplink transmissions. In such examples, PUCCHs 315-a may collide with downlink symbols from the base station 105-b.

For example, in some cases, a collision may occur if a PUCCH 315 carrying SPS ACK/NACK bits partially or fully overlaps with a combination of downlink symbol types, including one or more RRC configured downlink symbols, one or more RRC configured flexible symbols that are SSB symbols or CORESET (e.g., a CORESET 0) symbols, one or more downlink symbols dynamically indicated by DCI 325 (e.g., a DCI format 2_0, which may include a dynamic SFI), one or more downlink transmissions dynamically scheduled by DCI 325, including at least a CSI reference signal (CSI-RS) and a PDSCH 305, and one or more RRC configured flexible symbols under any combination of one or more conditions. For example, the symbols may include any one or more RRC configured flexible symbols without any condition. In some cases, the symbols may include any one or more RRC configured flexible symbols when the base station 105-b may indicate no uplink transmissions on RRC configured flexible symbols at least if the UE 115-b does not receive DCI format 2_0 providing a slot format for these symbols. In some cases, the indication of no uplink transmissions on those symbols may be from the base station 105-b refraining from configuring an RRC flag (e.g., enableConfiguredUL). In some cases, the symbols may include any one or more RRC configured flexible symbols within a quantity X symbols from the latest RRC or DCI indicated downlink symbols, where X may represent an uplink to downlink switching time. In some cases, X may be indicated by the base station 105-b (e.g., via RRC signaling, a MAC-CE, or DCI 325), X may be based on UE capability, or X may be fixed (e.g., X=1 for FR1, X=2 for FR2). In some cases, the any one or more RRC configured flexible symbols may be different than random access channel (RACH) occasion symbols. In some cases, the UE 115-b may partially or fully cancel the SPS ACK/NACK based on an indication (e.g., a cancellation indicator) from the base station 105-b. For example, the offset between the DCI 325 scheduling downlink transmissions and the PUCCH 315 for SPS ACK/NACK may be no less than a threshold for the UE 115-b to cancel (e.g., drop) the PUCCH. In some cases, the UE 115-b may apply these techniques for SPS ACK/NACK bits and UCI bits with the same uplink physical layer (PHY) priority (e.g., high or low). If a collision occurs, HARQ bits transmitted on a collided PUCCH 315 may not be received or successfully decoded by the base station 105-b. This may result in failed transmissions, unnecessary retransmissions, inefficient use of available resources, increased system latency, and decreased user experience.

In some cases, to avoid such collisions, the UE 115-b may defer the SPS ACK/NACK bits (e.g., of a collided PUCCH 315-a) to a first (e.g., earliest) available PUCCH resource 320 (e.g., PUCCH resource 320-a) that may accommodate at least a portion of PUCCH 315. The UE 115-b may check slot by slot after the slot with the original collided PUCCH 315 until the UE 115-b finds the first PUCCH resource 320 that may accommodate at least a portion of the PUCCH resource as the one that collided. In some examples, all affected HARQ bits (e.g., from one or more collided PUCCHs 315) may be deferred to the first available PUCCH resource 320-a.

In some cases, the UE 115-b may spread deferred SPS PUCCH ACK/NACK signaling (e.g., for one or multiple collided SPS PUCCHs 315) over multiple PUCCH resources 320. The first available PUCCH resource 320 may not accommodate the PUCCH 315 carrying SPS ACK/NACK bits from all the collided SPS PUCCHs 315 (e.g., collided PUCCH 315-a and collided PUCCH 315-b). For example, two SPS PUCCH transmissions, such as the collided PUCCH 315-a and the collided PUCCH 315-b may collide with downlink symbols in corresponding slots. In such examples, all affected HARQ bits may be deferred to the next number (e.g., *N*) of PUCCH resources 320. As described herein, affected HARQ bits may be deferred equally across *N* PUCCH resources 320, or divided unevenly according to one or more rules or instructions. However,

In some cases, the selected PUCCH resource 320 may already carry existing, non-deferred UCI bits for transmission, and as such, the selected PUCCH resource 320 may not have the capacity to carry the PUCCH for existing UCI bits plus the SPS ACK/NACK bits from the collided PUCCHs 315. For example, the selected PUCCH resource 320-a may be indicated to transmit existing, non-deferred SPS ACK/NACK bits in a third PUCCH (e.g., for an SPS config 3). In some cases, SPS ACK/NACK bits may therefore be divided across multiple PUCCH resources 320 (e.g., to accommodate for PUCCH resources 320 that already carry deferred or non-deferred SPS ACK/NACK bits). In some cases, where the selected PUCCH resource 320 may already carry existing, non-deferred UCI bits to be transmitted, the UE 115-b may multiplex the deferred SPS feedback bits and the non-deferred UCI bits in the selected PUCCH resource 320 for transmitting. However, the uplink symbols 330 of that selected PUCCH resources 320 may not accommodate all the SPS ACK/NACK bits that have been deferred which may overload the first available or selected PUCCH resource 320. For example, if a selected PUCCH resource 320-a has existing, non-deferred UCI bits, it may not accommodate the non-deferred UCI bits and the deferred feedback bits (e.g., the size of the feedback bits and UCI bits combined may be greater than an allocation size of the PUCCH resource 320-a). In some cases, the UE 115-b may cancel (e.g., drop) transmission of some or all of the UCI bits or the feedback bits, or may continue to check the next available PUCCH resource 320-b for transmitting at least a portion of the collided UCI bits and feedback bits, or a combination thereof.

In some cases, a UE 115-b may distribute SPS ACK/NACK bits from at least one or more PDSCH 305 (e.g., the PDSCH 305-a according to a first SPS configuration and the PDSCH 305-b according to a second SPS configuration) across multiple PUCCH resources 320 (e.g., the PUCCH resource 320-a and the PUCCH resource 320-b) in accordance with a deferment pattern. The deferment pattern may be defined in one or more rules or standards, may be preconfigured at the UE 115-b, or may indicated (e.g., by base station 105-b) in a DCI 325, a PDSCH 305, a PDCCH, or the like. For example, the UE 115-b may transmit an equal number of the affected HARQ bits in N PUCCH resources 320 for M SPS configurations (e.g., PUCCH resource 320-a and PUCCH resource 320-b for PDSCH 305-a and PDSCH 305-b). For instance, the UE 115-b may generate 1 HARQ bit for transmission in collided PUCCH 315-a (e.g., corresponding to PDSCH 305-a or SPS config 1) and 1 HARQ bit for transmission on collided PUCCH 315-b (e.g., corresponding to PDSCH 305-b or SPS config 2). Based on a collision with one or more downlink symbols (e.g., as described herein with reference to FIG. 2), the UE 115-b may defer the affected SPS ACK/NACK bits to the next N PUCCH resources 320 and spread the SPS ACK/NACK bits equally (e.g., 2 PUCHH resources 320 where UE 115-b defers 1 HARQ bit to the PUCCH resource 320-a and 1 HARQ bit to the PUCCH resource 320-b). In some examples, the pattern may be different (e.g., UE 115-b spreads 50% of the SPS ACK/NACK bits to a first PUCCH resource 320, 25% of the SPS ACK/NACK bits to a second PUCCH resource 320, 25% of the SPS ACK/NACK bits to a third PUCCH resource 320, etc.). For instance, if the UE 115-b generates 4 HARQ bits (e.g., for 4 different PDSCHs 305), then the UE 115-b may transmit 2 of the 4 HARQ bits in a first available PUCCH resource 320, 1 of the 4 HARQ bits in a second available PUCCH resource 320, and 1 of the 4 HARQ bits in a third available PUCCH resource 320. Thus, the pattern may indicate that the UE 115-b is to any portion or percentage of deferred SPS ACK/NACK bits across any number of PUCCH resources 320. In some examples a number of PUCCH resources 320 *N* and a number of SPS HARQ bits *M* may be related (e.g., may be the same, or may be multiples of each other).

The base station 105-b may indicate different allocations (deferment patterns) to the UE 115-b. For instance, the base station may transmit a DCI 325 including an indication that the UE 115-b may equally spread deferred HARQ bits across multiple (e.g., first and second) available PUCCH resources 320 (e.g., 1 deferred HARQ bit in PUCCH resource 320-a, and 1 deferred HARQ bit in PUCCH resource 320-b). Or, as described herein, the base station 105-b may indicate a pattern (e.g., an unequal distribution) of deferred HARQ bits across a number of PUCCH resources 320. For instance, the base station 105-b may indicate a number of deferred HARQ bits, a portion of deferred HARQ bits, or a percentage of deferred HARQ bits to be allocated to each of a set of subsequent available PUCCH resources 320. In some examples, the base station 105-b may make such determinations based on traffic information, scheduling information, or the like. For instance, if PUCCH resource 320-a is already scheduled for transmission of UCI, then the base station 105-b may determine that allocation all deferred HARQ bits, or a portion of deferred HARQ bits exceeding a threshold amount of HARQ bits), to PUCCH resource 320 may result in overloading of PUCCH resources 320-a. In such examples, the base station 105-b may select and indicate (e.g., in DCI 325) a deferment pattern that only includes a portion of the deferred HARQ bits in the first available PUCCH resource 320-a (e.g., 25% of the deferred HARQ bits in PUCCH resource 320-a, 25% of the deferred HARQ bits in PUCCH resource 320-b, 50% of the remaining deferred HARQ bits in a third PUCCH resource 320, or the like). In some examples, where wireless traffic is heavy, interference levels are high, channel quality measurements exceed a threshold, or the like, the base station 105-b may indicate (e.g., via DCI 325) that smaller portions or percentages of deferred HARQ bits are to be allocated to each available PUCCH resource 320, or to particular PUCCH resources 320, or any combination thereof.

In some examples, the base station 105-b may indicate the transmission pattern of multiple deferred SPS ACK/NACK bits over available PUCCH resources 320. For example, the base station 105-b may indicate whether the UE 115-b should distribute the SPS ACK/NACK bits across multiple PUCCH resources 320 (e.g., UE 115-b distributes all M SPS ACK/NACK bits equally to N PUCCH resources 320) or transmit all of the SPS ACK/NACK feedback bits in a first available PUCCH resource 320 (e.g., UE 115-b transmits all SPS ACK/NACK bits in PUCCH resource 320-a).

If the UE 115-b distributes deferred HARQ bits across multiple available PUCCH resources 320, then the UE 115-b may order the deferred HARQ bits according to one or more rules. That is, the UE 115-b may determine which HARQ bits (e.g., from one or multiple SPS configurations for one or more SPS transmissions) are to be transmitted in which available PUCCH resources 320. In some examples, the UE may order the deferred HARQ bits based on dropped PUCCH occasion time order, regardless of the SPS configuration. For instance, the UE 115-b may be configured with two SPS configurations (e.g., SPS config 1 and SPS config 2), and may monitor for and receive SPS transmissions (e.g., via PDSCHs 305) across multiple (e.g., 3) cycles). Thus, the base station 105-b may transmit the SPS transmissions in the following order: A first SPS transmissions for SPS config1 during cycle 1, a second SPS transmission for SPS config 2 during cycle 1, a third SPS transmission for SPS config 1 during cycle 2, a fourth SPS transmission for SPS config 2 during cycle 2, a fifth SPS transmission for SPS config 1 during cycle 3, and a sixth SPS transmission for SPS config 2 during cycle 3. If, for example, for the first 4 PUCCHs 315 there are collisions and HARQ occasions are deferred due to collisions with DL, then the UE 115-b may defer 4 HARQ bits for transmission on multiple (e.g., 2) available PUCCH resources 320 (e.g., PUCCH resource 320-a and PUCCH resource 320-b). The UE 115-b may transmit the HARQ bits for the first SPS transmission (e.g., for SPS config 1 during cycle 1) and the second SPS transmission (e.g., for SPS config 2 during cycle 1) in the first PUCCH resource 320-a and may transmit the HARQ bits for the third SPS transmission (e.g., for SPS config 1 during cycle 2) and the fourth SPS transmission (e.g., for SPS config 2 during cycle 2). Thus, the UE 115-b may order and distribute the deferred HARQ bits across multiple PUCCH resources 320 based on dropped PUCCH occasion time order (e.g., regardless of the SPS configuration).

In some examples, the UE 115-b may order and distribute deferred HARQ bits across multiple PUCCH resources 320 based on dropped PUCCH occasion time order per SPS configuration. For example, the UE 115-b may order the deferred HARQ bits such that the deferred HARQ bits associated with the lowest SPS configuration identifier are transmitted before (e.g., in an earlier PUCCH resource 320) HARQ bits associated with a second lowest SPS configuration identifier. For instance, the UE 115-b may be configured with two SPS configurations (e.g., SPS config 1 and SPS config 2), and may monitor for and receive SPS transmissions (e.g., via PDSCHs 305) across multiple (e.g., 3) cycles). Thus, the base station 105-b may transmit the SPS transmissions in the following order: A first SPS transmissions for SPS config1 during cycle 1, a second SPS transmission for SPS config 2 during cycle 1, a third SPS transmission for SPS config 1 during cycle 2, a fourth SPS transmission for SPS config 2 during cycle 2, a fifth SPS transmission for SPS config 1 during cycle 3, and a sixth SPS transmission for SPS config 2 during cycle 3. If, for example, for the first 4 PUCCHs 315 there are collisions and HARQ occasions are deferred due to collisions with DL, then the UE 115-b may defer 4 HARQ bits for transmission on multiple (e.g., 2) available PUCCH resources 320 (e.g., PUCCH resource 320-a and PUCCH resource 320-b). The UE 115-b may transmit the HARQ bits for the first SPS transmission (e.g., for SPS config 1 during cycle 1) and the third SPS transmission (e.g., for SPS config 1 during cycle 2) in the first PUCCH resource 320-a and may transmit the HARQ bits for the second SPS transmission (e.g., for SPS config 2 during cycle 2) and the fourth SPS transmission (e.g., for SPS config 2 during cycle 2). Thus, the UE 115-b may order and distribute the deferred HARQ bits across multiple PUCCH resources 320 based on the dropped PUCCH occasion time order per SPS configuration.

Although described with reference to a specific number of SBS configurations (e.g., two SPS configurations), the described techniques may apply to any number of HARQ bits (e.g., *K* sets of HARQ bits) for any number of SPS configurations (e.g., *K* SPS configurations).

In some examples, the UE 115-b may refrain from transmitting one or more deferred HARQ bits based on the deferment pattern. For example, the UE 115-b may defer 1 HARQ bit from collided PUCCH 315-a and 1 HARQ bit from collided PUCCH 315-b. However, the feedback deferment pattern may indicate that the UE 115-b only transmit one of the deferred HARQ bits (e..g, the last HARQ bit from, for instance collided PUCCH 315-b if the earlier HARQ bit from PUCCH 315-a corresponds to a downlink packet that has expired. Thus, the UE 115-b may refrain from transmitting the first HARQ bit and may only transmit the second or later HARQ bit according to the feedback deferment pattern.

**FIG. 4** illustrates an example of a process flow 400 that supports techniques for deferring feedback upon uplink control channel collisions in accordance with aspects of the present disclosure. The process flow 400 may implement aspects of wireless communications systems 100 and 200, or may be implemented by aspects of the wireless communications system 100 and 200. For example, the base station 105-c and the UE 115-c may be examples of a base station 105 and a UE 115, as described with reference to FIGs. 1-3. In the following description of the process flow 400, the operations between the base station 105-c and the UE 115-c may be transmitted in a different order than the example order shown, or the operations performed by the base station 105-c and the UE 115-c may be performed in different orders or at different times. Some operations may also be omitted from the process flow 400, and other operations may be added to the process flow 400.

At 405, the UE 115-c may transmit, and the UE 105-c may receive, one or more downlink transmissions associated with one or more SPS configuration. For example, the base station 105-c may transmit, and the UE 105-c may receive, a first set of downlink transmissions (e.g., on a PDSCH) of a first SPS configuration at 405-a and a second set of downlink transmissions of a second SPS configuration at 405-b. Accordingly, a first set of feedback bits associated with a first set of downlink transmissions, and a second set of feedback bits associated with a second set of feedback bits, may be scheduled for transmission to the base station 105-c in a first set of uplink symbols. In some cases, the first set of uplink symbols may consist of a PUCCH occasion and one or more additional uplink symbols (e.g., available uplink symbols) may consist of one or more PUCCH occasions subsequent to the first PUCCH occasion.

At 410, the base station 105-c may transmit, and the UE 115-c may receive, an indication of a feedback deferment pattern from a set of candidate feedback deferment patterns. In some cases, the indication of the feedback deferment pattern may include at least one or more identifiers. The identifiers may be indicative of feedback deferment patterns that define corresponding distributions of feedback bits across one or more available uplink symbols subsequent to the first set of uplink symbols. For example, the one or more identifiers may be indicative of a first feedback deferment pattern and a second feedback deferment pattern that defines inclusion of all the feedback bits in a second set of available uplink symbols. Transmitting and/or receiving the indication of the feedback deferment pattern may also include transmitting and/or receiving RRC signaling, a DCI message, a media access control (MAC) control element (CE), or a combination thereof, containing the indication of the feedback deferment pattern. In some examples, the base station 105-c may determine that multiple UEs 115 (e.g., including the UE 115-c) are scheduled to transmit uplink signaling during the first set of uplink symbols, the plurality of uplink symbols, or both. In such examples, (e.g., based on scheduled uplink traffic), the base station 105-c may select a deferment pattern that avoids overload of any particular subset of available uplink symbols (e.g., a deferment pattern that does not allocate more feedback bits to a set of uplink symbols than can be accommodated by that set of uplink symbols, including any previously scheduled uplink signaling).

At 415, the UE 115-c may generate at least one or more sets of feedback bits associated with the SPS transmissions, the sets of feedback bits scheduled for transmission to a base station 105-c in at least one or more sets of available uplink symbols. For example, the UE 115-c may generate a first set of feedback bits associated with a first set of downlink transmissions of the first SPS configuration (e.g., SPS signaling received at 405-a) and a second set of feedback bits associated with the second set of downlink transmissions of the second SPS configuration (e.g., SPS signaling received at 405-b). In some examples, the feedback bits may include ACK/NACK bits or other feedback bits.

At 425, the UE 115-c may identify, based at least in part on a change in format associated with the first set of uplink symbols, that at least a portion of the first set of uplink symbols is not available for transmission of the first set of feedback bits. For instance, symbols that were allocated as uplink symbols in a first slot format may be downlink symbols in a second slot format. Or, a flexible symbol may be allocated as a downlink symbol, resulting in a collided PUCCH.

At 430, the UE 115-c may identify that the feedback deferment pattern defines the distribution of the feedback bits to at least one or more subsets of the available uplink symbols subsequent to the first set of uplink symbols. In some example, the feedback deferment pattern may define the inclusion of the feedback bits into a single available PUCCH resource (e.g., a single subset of one or more available uplink symbols subsequent to the first set of uplink symbols). In some examples, the base station 105-c may transmit, and the UE 115-c may receive, an indication of the feedback deferment pattern (e.g., at 410).

In some examples, at 430, the UE 115-c may identify that the feedback deferment pattern defines the distribution of a first portion of the feedback bits to a first subset of the available uplink symbols, and a second portion of the feedback bits to a second subset of the available uplink symbols. In some cases, the first portion of the feedback bits is equal to the second portion of the feedback bits (e.g., the first portion has 50% of the feedback bits and the second portion has 50% of the feedback bits). In some other cases, the first portion of the feedback bits is not equal to the second portion of the feedback bits (e.g., the first portion has 75% of the feedback bits and the second portion has 25% of the feedback bits). In some examples, the base station 105-c may transmit, and the UE 115-c may receive, an indication of the feedback deferment pattern (e.g., at 410).

In some examples, at 430, the UE 115-c may identify one or more rules including the feedback deferment pattern that defines the distribution of the feedback bits within one subset of the uplink symbols subsequent to the first set of uplink symbols or across the plurality of uplink symbols subsequent to the first set of uplink symbols. The UE 115-c may distribute according to the feedback deferment pattern, the first set of feedback bits and the second set of feedback bits equally across multiple subsets of the plurality of uplink symbols, wherein a number of the multiple subsets is equal to a number of semi-persistent scheduling configurations including the first semi-persistent scheduling configuration and the second semi-persistent scheduling configuration. In some examples, the one or more rules may be included in one or more standards documents, or may be preconfigured at the UE 115-c. In some examples, the base station 105-c may transmit, to the UE 115-c, an indication of the one or more rules.

At 420, the base station 105-c may identify, based at least in part on a change in format associated with the first set of uplink symbols, that at least a portion of the first set of uplink symbols is not available for transmission of the first set of feedback bits. For example, the base station 105-c may transmit control signaling (e.g., DCI signaling) that indicates resources for transmitting the feedback bits are configured for downlink transmissions, and so are no longer available for uplink transmissions. Accordingly, the UE 115-c may determine a collision with the configured downlink symbols. The base station may receive the one or more sets of feedback bits based at least in part on the change in format.

At 435, the UE 115-c may transmit, and base station 105-c may receive, one or more sets of feedback bits in accordance with the feedback deferment pattern that defines the distribution of the feedback bits across the available uplink symbols subsequent to the first set of uplink symbols. For example, if the deferment pattern indicates that the UE 115-c is to transmit all of the deferred feedback bits to base station 105-c in a single PUCCH resource at 435-a. If the deferment pattern indicates that the UE 115-c is to distribute the deferred feedback bits across multiple PUCCH resources, then the UE 115-c may transmit, and base station 105-c may receive, a first set of feedback bits at 435-a (e.g., in a first subset of available uplink symbols) and a second set of feedback bits at 435-b (e.g., in a second subset of the available uplink symbols) in accordance with the feedback deferment pattern. In some examples, the UE 115-c may distribute the deferred feedback bits according to an order or prioritizing scheme. For example, the UE 115-c may order the first set of feedback bits and the second set of feedback bits according to a prioritization based at least in part on a timing of the first set of uplink symbols, and may distribute the first set of feedback bits and the second set of feedback bits across the multiple uplink symbols subsequent to the first set of uplink symbols according to the feedback deferment pattern and the ordering. In some examples, the UE 115-c may order the first set of feedback bits and the second set of feedback bits according to a priority level of the first semi-persistent scheduling configuration and a priority level of the second semi-persistent scheduling configuration (e.g. a lower SPS configuration identifier may have a higher priority level than a higher SPS configuration identifier), and the UE 115-b may distribute the first set of feedback bits and the second set of feedback bits across the multiple uplink symbols subsequent to the first set of uplink symbols according to the feedback deferment pattern and the ordering.

The operations performed at the UE 115-c and the base station 105-c may improve resource utilization, and in some examples, may promote network efficiency, among other benefits.

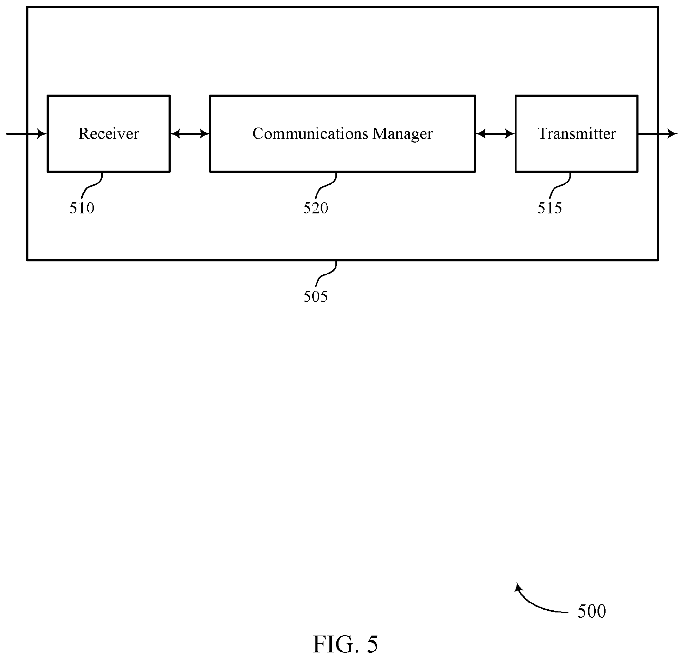

**FIG. 5** shows a block diagram 500 of a device 505 that supports techniques for deferring feedback upon uplink control channel collisions in accordance with aspects of the present disclosure. The device 505 may be an example of aspects of a UE 115 as described herein. The device 505 may include a receiver 510, a transmitter 515, and a communications manager 520. The device 505 may also include a processor. Each of these components may be in communication with one another (e.g., via one or more buses).

The receiver 510 may provide a means for receiving information such as packets, user data, control information, or any combination thereof associated with various information channels (e.g., control channels, data channels, information channels related to techniques for deferring feedback upon uplink control channel collisions ). Information may be passed on to other components of the device 505. The receiver 510 may utilize a single antenna or a set of multiple antennas.

The transmitter 515 may provide a means for transmitting signals generated by other components of the device 505. For example, the transmitter 515 may transmit information such as packets, user data, control information, or any combination thereof associated with various information channels (e.g., control channels, data channels, information channels related to techniques for deferring feedback upon uplink control channel collisions ). In some examples, the transmitter 515 may be co-located with a receiver 510 in a transceiver module. The transmitter 515 may utilize a single antenna or a set of multiple antennas.

The communications manager 520, the receiver 510, the transmitter 515, or various combinations thereof or various components thereof may be examples of means for performing various aspects of techniques for deferring feedback upon uplink control channel collisions as described herein. For example, the communications manager 520, the receiver 510, the transmitter 515, or various combinations or components thereof may support a method for performing one or more of the functions described herein.

In some examples, the communications manager 520, the receiver 510, the transmitter 515, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 520, the receiver 510, the transmitter 515, or various combinations or components thereof may be implemented in code (e.g., as communications management software or firmware) executed by a processor. If implemented in code executed by a processor, the functions of the communications manager 520, the receiver 510, the transmitter 515, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 520 may be configured to perform various operations (e.g., receiving, monitoring, transmitting) using or otherwise in cooperation with the receiver 510, the transmitter 515, or both. For example, the communications manager 520 may receive information from the receiver 510, send information to the transmitter 515, or be integrated in combination with the receiver 510, the transmitter 515, or both to receive information, transmit information, or perform various other operations as described herein.

The communications manager 520 may support wireless communications at a UE in accordance with examples as disclosed herein. For example, the communications manager 520 may be configured as or otherwise support a means for generating a first set of feedback bits associated with a first set of downlink transmissions of a first semi-persistent scheduling configuration and a second set of feedback bits associated with a second set of downlink transmissions of a second semi-persistent scheduling configuration, both the first set of feedback bits and the second set of feedback bits scheduled for transmission to a base station in a first set of uplink symbols. The communications manager 520 may be configured as or otherwise support a means for identifying, based on a change in format associated with the first set of uplink symbols, that at least a portion of the first set of uplink symbols is not available for transmission of the first set of feedback bits. The communications manager 520 may be configured as or otherwise support a means for transmitting the first set of feedback bits and the second set of feedback bits in accordance with a feedback deferment pattern that defines a distribution of the feedback bits across a set of multiple uplink symbols subsequent to the first set of uplink symbols.

By including or configuring the communications manager 520 in accordance with examples as described herein, the device 505 (e.g., a processor controlling or otherwise coupled to the receiver 510, the transmitter 515, the communications manager 520, or a combination thereof) may support techniques for transmitting deferred SPS HARQ feedback bits, which may result in decreased system latency, improved use of available resources, improved user experience, and the like.

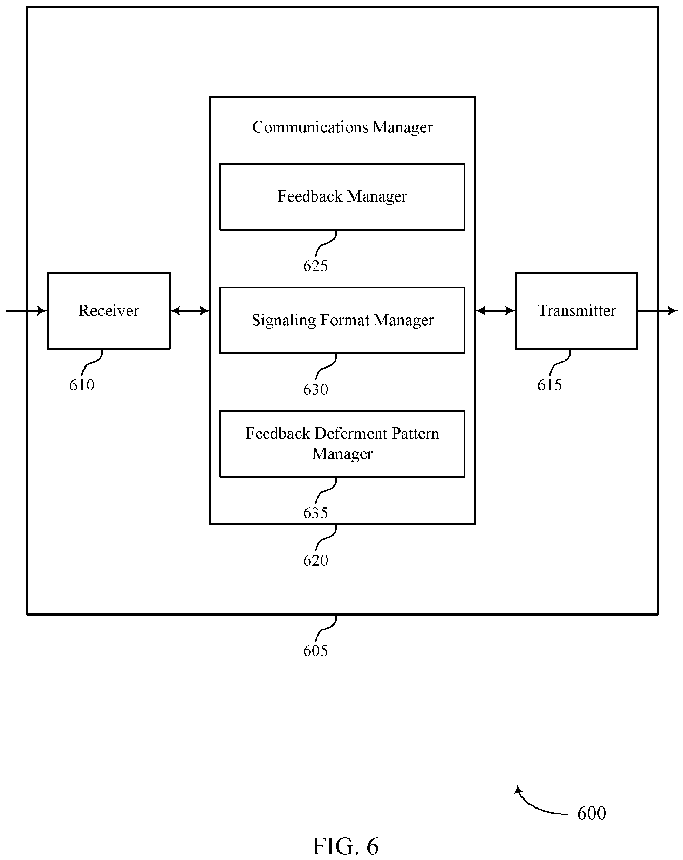

**FIG. 6** shows a block diagram 600 of a device 605 that supports techniques for deferring feedback upon uplink control channel collisions in accordance with aspects of the present disclosure. The device 605 may be an example of aspects of a device 505 or a UE 115 as described herein. The device 605 may include a receiver 610, a transmitter 615, and a communications manager 620. The device 605 may also include a processor. Each of these components may be in communication with one another (e.g., via one or more buses).

The receiver 610 may provide a means for receiving information such as packets, user data, control information, or any combination thereof associated with various information channels (e.g., control channels, data channels, information channels related to techniques for deferring feedback upon uplink control channel collisions ). Information may be passed on to other components of the device 605. The receiver 610 may utilize a single antenna or a set of multiple antennas.

The transmitter 615 may provide a means for transmitting signals generated by other components of the device 605. For example, the transmitter 615 may transmit information such as packets, user data, control information, or any combination thereof associated with various information channels (e.g., control channels, data channels, information channels related to techniques for deferring feedback upon uplink control channel collisions ). In some examples, the transmitter 615 may be co-located with a receiver 610 in a transceiver module. The transmitter 615 may utilize a single antenna or a set of multiple antennas.

The device 605, or various components thereof, may be an example of means for performing various aspects of techniques for deferring feedback upon uplink control channel collisions as described herein. For example, the communications manager 620 may include a feedback manager 625, a signaling format manager 630, a feedback deferment pattern manager 635, or any combination thereof. The communications manager 620 may be an example of aspects of a communications manager 520 as described herein. In some examples, the communications manager 620, or various components thereof, may be configured to perform various operations (e.g., receiving, monitoring, transmitting) using or otherwise in cooperation with the receiver 610, the transmitter 615, or both. For example, the communications manager 620 may receive information from the receiver 610, send information to the transmitter 615, or be integrated in combination with the receiver 610, the transmitter 615, or both to receive information, transmit information, or perform various other operations as described herein.

The communications manager 620 may support wireless communications at a UE in accordance with examples as disclosed herein. The feedback manager 625 may be configured as or otherwise support a means for generating a first set of feedback bits associated with a first set of downlink transmissions of a first semi-persistent scheduling configuration and a second set of feedback bits associated with a second set of downlink transmissions of a second semi-persistent scheduling configuration, both the first set of feedback bits and the second set of feedback bits scheduled for transmission to a base station in a first set of uplink symbols. The signaling format manager 630 may be configured as or otherwise support a means for identifying, based on a change in format associated with the first set of uplink symbols, that at least a portion of the first set of uplink symbols is not available for transmission of the first set of feedback bits. The feedback deferment pattern manager 635 may be configured as or otherwise support a means for transmitting the first set of feedback bits and the second set of feedback bits in accordance with a feedback deferment pattern that defines a distribution of the feedback bits across a set of multiple uplink symbols subsequent to the first set of uplink symbols.

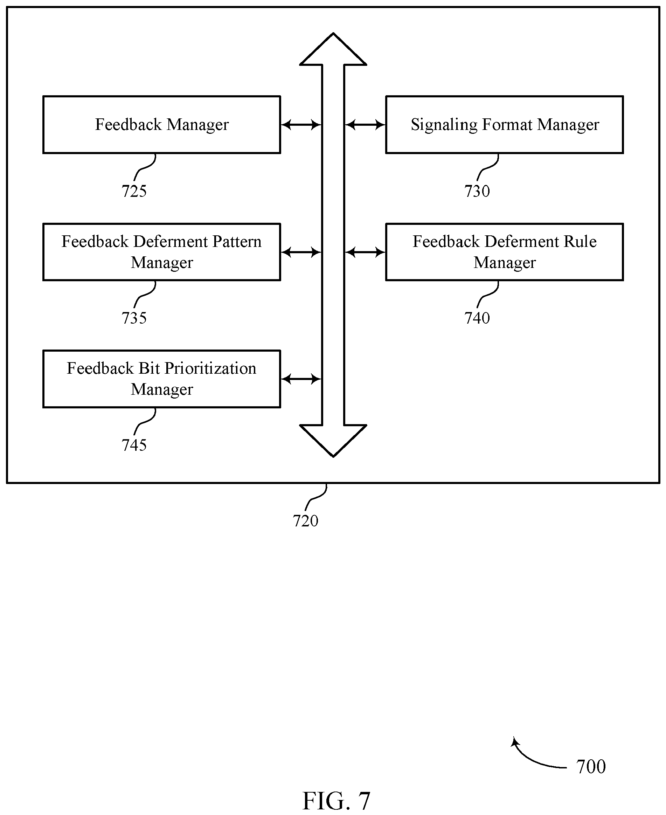

**FIG. 7** shows a block diagram 700 of a communications manager 720 that supports techniques for deferring feedback upon uplink control channel collisions in accordance with aspects of the present disclosure. The communications manager 720 may be an example of aspects of a communications manager 520, a communications manager 620, or both, as described herein. The communications manager 720, or various components thereof, may be an example of means for performing various aspects of techniques for deferring feedback upon uplink control channel collisions as described herein. For example, the communications manager 720 may include a feedback manager 725, a signaling format manager 730, a feedback deferment pattern manager 735, a feedback deferment rule manager 740, a feedback bit prioritization manager 745, or any combination thereof. Each of these components may communicate, directly or indirectly, with one another (e.g., via one or more buses).

The communications manager 720 may support wireless communications at a UE in accordance with examples as disclosed herein. The feedback manager 725 may be configured as or otherwise support a means for generating a first set of feedback bits associated with a first set of downlink transmissions of a first semi-persistent scheduling configuration and a second set of feedback bits associated with a second set of downlink transmissions of a second semi-persistent scheduling configuration, both the first set of feedback bits and the second set of feedback bits scheduled for transmission to a base station in a first set of uplink symbols. The signaling format manager 730 may be configured as or otherwise support a means for identifying, based on a change in format associated with the first set of uplink symbols, that at least a portion of the first set of uplink symbols is not available for transmission of the first set of feedback bits. The feedback deferment pattern manager 735 may be configured as or otherwise support a means for transmitting the first set of feedback bits and the second set of feedback bits in accordance with a feedback deferment pattern that defines a distribution of the feedback bits across a set of multiple uplink symbols subsequent to the first set of uplink symbols.

In some examples, the feedback deferment pattern manager 735 may be configured as or otherwise support a means for receiving, from the base station, an indication of the feedback deferment pattern from a set of candidate feedback deferment patterns.

In some examples, to support receiving the indication of the feedback deferment pattern, the feedback deferment pattern manager 735 may be configured as or otherwise support a means for receiving an identifier that is one of a set of multiple identifiers, where the set of multiple identifiers is indicative of one or more first feedback deferment patterns that each defines corresponding distributions of feedback bits across the set of multiple uplink symbols subsequent to the first set of uplink symbols, the set of multiple identifiers also being indicative of a second feedback deferment pattern that defines inclusion of all of the feedback bits in a second set of uplink symbols subsequent to the first set of uplink symbols. In some examples, the feedback deferment pattern manager 735 may be configured as or otherwise support a means for generating a third set of feedback bits associated with a third set of downlink transmissions of a third semi-persistent scheduling configuration, the third set of feedback bits scheduled for transmission to the base station in the first set of uplink symbols and refraining from transmitting the third set of feedback bits in accordance with the feedback deferment pattern that defines the distribution of the feedback bits across the plurality of uplink symbols subsequent to the first set of uplink symbols.

In some examples, to support receiving the indication of the feedback deferment pattern, the feedback deferment pattern manager 735 may be configured as or otherwise support a means for receiving radio resource control signaling including the indication of the feedback deferment pattern, a downlink control information message including the indication of the feedback deferment pattern, a MAC control element (CE) including the indication of the feedback deferment pattern, or a combination thereof. The feedback deferment pattenr manager 735 may generate a third set of feedback bits associated with a third set of downlink transmissions of a third semi-persistent scheduling configuration, the third set of feedback bits scheduled for transmission to the base station in the first set of uplink symbols.

In some examples, the feedback deferment pattern manager 735 may be configured as or otherwise support a means for identifying that the feedback deferment pattern defines the distribution of a first portion of the feedback bits to a first subset of the set of multiple uplink symbols subsequent to the first set of uplink symbols, and a second portion of the feedback bits to a second subset of the set of multiple uplink symbols subsequent to the first set of uplink symbols. In some examples, the first portion of the feedback bits is equal to the second portion of the feedback bits. In some examples, the first portion of the feedback bits is not equal to the second portion of the feedback bits.

In some examples, the feedback deferment rule manager 740 may be configured as or otherwise support a means for identifying one or more rules including the feedback deferment pattern that defines the distribution of the feedback bits across the set of multiple uplink symbols subsequent to the first set of uplink symbols. In some examples, the feedback deferment rule manager 740 may be configured as or otherwise support a means for distributing, according to the feedback deferment pattern, the first set of feedback bits and the second set of feedback bits equally across multiple subsets of the set of multiple uplink symbols, where a number of the multiple subsets is equal to a number of semi-persistent scheduling configurations including the first semi-persistent scheduling configuration and the second semi-persistent scheduling configuration. In some examples, the feedback deferment rule manager 740 may be configured as or otherwise support a means for receiving, from the base station, an indication of the one or more rules.

In some examples, the feedback bit prioritization manager 745 may be configured as or otherwise support a means for ordering the first set of feedback bits and the second set of feedback bits according to a prioritization based on a timing of the first set of uplink symbols. In some examples, the feedback bit prioritization manager 745 may be configured as or otherwise support a means for distributing, according to the feedback deferment pattern and the ordering, the first set of feedback bits and the second set of feedback bits across the set of multiple uplink symbols subsequent to the first set of uplink symbols.

In some examples, the feedback bit prioritization manager 745 may be configured as or otherwise support a means for ordering the first set of feedback bits and the second set of feedback bits according to a priority level of the first semi-persistent scheduling configuration and a priority level of the second semi-persistent scheduling configuration. In some examples, the feedback bit prioritization manager 745 may be configured as or otherwise support a means for distributing, according to the feedback deferment pattern and the ordering, the first set of feedback bits and the second set of feedback bits across the set of multiple uplink symbols subsequent to the first set of uplink symbols.

In some examples, the first set of uplink symbols includes a first physical uplink control channel occasion, and where the set of multiple uplink symbols includes one or more additional physical uplink control channel occasions subsequent to the first physical uplink control channel occasion.

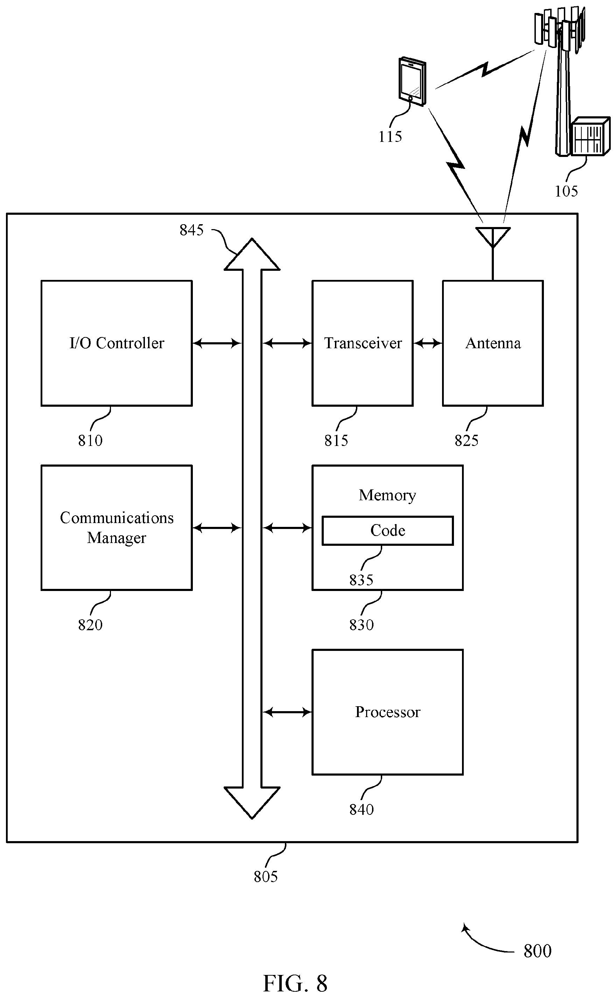

**FIG. 8** shows a diagram of a system 800 including a device 805 that supports techniques for deferring feedback upon uplink control channel collisions in accordance with aspects of the present disclosure. The device 805 may be an example of or include the components of a device 505, a device 605, or a UE 115 as described herein. The device 805 may communicate wirelessly with one or more base stations 105, UEs 115, or any combination thereof. The device 805 may include components for bi-directional voice and data communications including components for transmitting and receiving communications, such as a communications manager 820, an input/output (I/O) controller 810, a transceiver 815, an antenna 825, a memory 830, code 835, and a processor 840. These components may be in electronic communication or otherwise coupled (e.g., operatively, communicatively, functionally, electronically, electrically) via one or more buses (e.g., a bus 845).

The I/O controller 810 may manage input and output signals for the device 805. The I/O controller 810 may also manage peripherals not integrated into the device 805. In some cases, the I/O controller 810 may represent a physical connection or port to an external peripheral. In some cases, the I/O controller 810 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally, or alternatively, the I/O controller 810 may represent or interact with a modem, a keyboard, a mouse, a touchscreen, or a similar device. In some cases, the I/O controller 810 may be implemented as part of a processor, such as the processor 840. In some cases, a user may interact with the device 805 via the I/O controller 810 or via hardware components controlled by the I/O controller 810.

In some cases, the device 805 may include a single antenna 825. However, in some other cases, the device 805 may have more than one antenna 825, which may be capable of concurrently transmitting or receiving multiple wireless transmissions. The transceiver 815 may communicate bi-directionally, via the one or more antennas 825, wired, or wireless links as described herein. For example, the transceiver 815 may represent a wireless transceiver and may communicate bi-directionally with another wireless transceiver. The transceiver 815 may also include a modem to modulate the packets, to provide the modulated packets to one or more antennas 825 for transmission, and to demodulate packets received from the one or more antennas 825. The transceiver 815, or the transceiver 815 and one or more antennas 825, may be an example of a transmitter 515, a transmitter 615, a receiver 510, a receiver 610, or any combination thereof or component thereof, as described herein.

The memory 830 may include random access memory (RAM) and read-only memory (ROM). The memory 830 may store computer-readable, computer-executable code 835 including instructions that, when executed by the processor 840, cause the device 805 to perform various functions described herein. The code 835 may be stored in a non-transitory computer-readable medium such as system memory or another type of memory. In some cases, the code 835 may not be directly executable by the processor 840 but may cause a computer (e.g., when compiled and executed) to perform functions described herein. In some cases, the memory 830 may contain, among other things, a basic I/O system (BIOS) which may control basic hardware or software operation such as the interaction with peripheral components or devices.

The processor 840 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 840 may be configured to operate a memory array using a memory controller. In some other cases, a memory controller may be integrated into the processor 840. The processor 840 may be configured to execute computer-readable instructions stored in a memory (e.g., the memory 830) to cause the device 805 to perform various functions (e.g., functions or tasks supporting techniques for deferring feedback upon uplink control channel collisions ). For example, the device 805 or a component of the device 805 may include a processor 840 and memory 830 coupled to the processor 840, the processor 840 and memory 830 configured to perform various functions described herein.

The communications manager 820 may support wireless communications at a UE in accordance with examples as disclosed herein. For example, the communications manager 820 may be configured as or otherwise support a means for generating a first set of feedback bits associated with a first set of downlink transmissions of a first semi-persistent scheduling configuration and a second set of feedback bits associated with a second set of downlink transmissions of a second semi-persistent scheduling configuration, both the first set of feedback bits and the second set of feedback bits scheduled for transmission to a base station in a first set of uplink symbols. The communications manager 820 may be configured as or otherwise support a means for identifying, based on a change in format associated with the first set of uplink symbols, that at least a portion of the first set of uplink symbols is not available for transmission of the first set of feedback bits. The communications manager 820 may be configured as or otherwise support a means for transmitting the first set of feedback bits and the second set of feedback bits in accordance with a feedback deferment pattern that defines a distribution of the feedback bits across a set of multiple uplink symbols subsequent to the first set of uplink symbols.

By including or configuring the communications manager 820 in accordance with examples as described herein, the device 805 may support techniques for transmitting deferred SPS HARQ feedback bits, which may result in decreased system latency, decreased communications delays, more efficient use of computational resources, more efficient utilization of available resources, improved user experience, and the like.

In some examples, the communications manager 820 may be configured to perform various operations (e.g., receiving, monitoring, transmitting) using or otherwise in cooperation with the transceiver 815, the one or more antennas 825, or any combination thereof. Although the communications manager 820 is illustrated as a separate component, in some examples, one or more functions described with reference to the communications manager 820 may be supported by or performed by the processor 840, the memory 830, the code 835, or any combination thereof. For example, the code 835 may include instructions executable by the processor 840 to cause the device 805 to perform various aspects of techniques for deferring feedback upon uplink control channel collisions as described herein, or the processor 840 and the memory 830 may be otherwise configured to perform or support such operations.

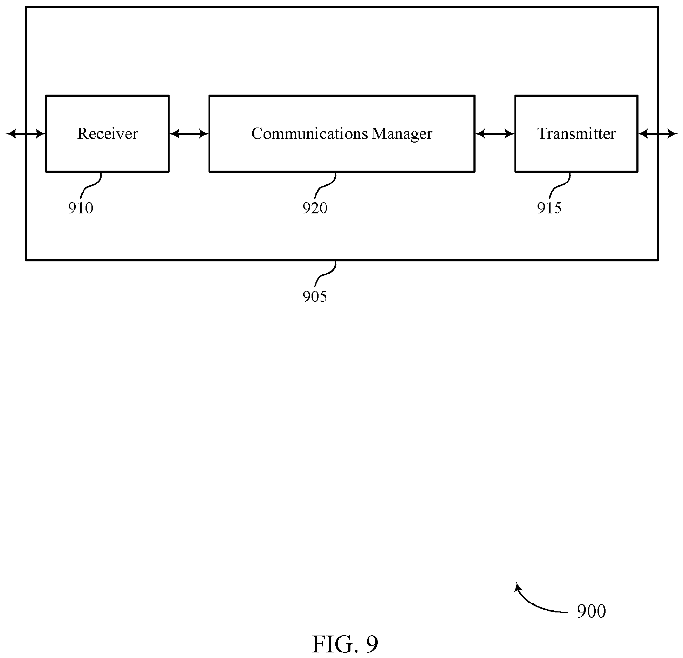

**FIG. 9** shows a block diagram 900 of a device 905 that supports techniques for deferring feedback upon uplink control channel collisions in accordance with aspects of the present disclosure. The device 905 may be an example of aspects of a base station 105 as described herein. The device 905 may include a receiver 910, a transmitter 915, and a communications manager 920. The device 905 may also include a processor. Each of these components may be in communication with one another (e.g., via one or more buses).

The receiver 910 may provide a means for receiving information such as packets, user data, control information, or any combination thereof associated with various information channels (e.g., control channels, data channels, information channels related to techniques for deferring feedback upon uplink control channel collisions ). Information may be passed on to other components of the device 905. The receiver 910 may utilize a single antenna or a set of multiple antennas.

The transmitter 915 may provide a means for transmitting signals generated by other components of the device 905. For example, the transmitter 915 may transmit information such as packets, user data, control information, or any combination thereof associated with various information channels (e.g., control channels, data channels, information channels related to techniques for deferring feedback upon uplink control channel collisions ). In some examples, the transmitter 915 may be co-located with a receiver 910 in a transceiver module. The transmitter 915 may utilize a single antenna or a set of multiple antennas.

The communications manager 920, the receiver 910, the transmitter 915, or various combinations thereof or various components thereof may be examples of means for performing various aspects of techniques for deferring feedback upon uplink control channel collisions as described herein. For example, the communications manager 920, the receiver 910, the transmitter 915, or various combinations or components thereof may support a method for performing one or more of the functions described herein.

In some examples, the communications manager 920, the receiver 910, the transmitter 915, or various combinations or components thereof may be implemented in hardware (e.g., in communications management circuitry). The hardware may include a processor, a DSP, an ASIC, an FPGA or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 920, the receiver 910, the transmitter 915, or various combinations or components thereof may be implemented in code (e.g., as communications management software or firmware) executed by a processor. If implemented in code executed by a processor, the functions of the communications manager 920, the receiver 910, the transmitter 915, or various combinations or components thereof may be performed by a general-purpose processor, a DSP, a CPU, an ASIC, an FPGA, or any combination of these or other programmable logic devices (e.g., configured as or otherwise supporting a means for performing the functions described in the present disclosure).

In some examples, the communications manager 920 may be configured to perform various operations (e.g., receiving, monitoring, transmitting) using or otherwise in cooperation with the receiver 910, the transmitter 915, or both. For example, the communications manager 920 may receive information from the receiver 910, send information to the transmitter 915, or be integrated in combination with the receiver 910, the transmitter 915, or both to receive information, transmit information, or perform various other operations as described herein.

The communications manager 920 may support wireless communications at a base station in accordance with examples as disclosed herein. For example, the communications manager 920 may be configured as or otherwise support a means for transmitting, to a UE, a first set of downlink transmissions of a first semi-persistent scheduling configuration and a second set of downlink transmissions of a second semi-persistent scheduling configuration, where a first set of feedback bits associated with the first set of downlink transmissions and a second set of feedback bits associated with the second set of downlink transmissions are scheduled for transmission to the base station in a first set of uplink symbols. The communications manager 920 may be configured as or otherwise support a means for identifying, based on a change in format associated with the first set of uplink symbols, that at least a portion of the first set of uplink symbols is not available for transmission of the first set of feedback bits. The communications manager 920 may be configured as or otherwise support a means for receiving, from the UE, the first set of feedback bits and the second set of feedback bits in accordance with a feedback deferment pattern that defines a distribution of the feedback bits across a set of multiple uplink symbols subsequent to the first set of uplink symbols.

By including or configuring the communications manager 920 in accordance with examples as described herein, the device 905 (e.g., a processor controlling or otherwise coupled to the receiver 910, the transmitter 915, the communications manager 920, or a combination thereof) may support techniques for communicating deferred SPS HARQ feedback bits, which may result in decreased system latency, decreased communications delays, more efficient use of computational resources, more efficient utilization of available resources, improved user experience, and the like.

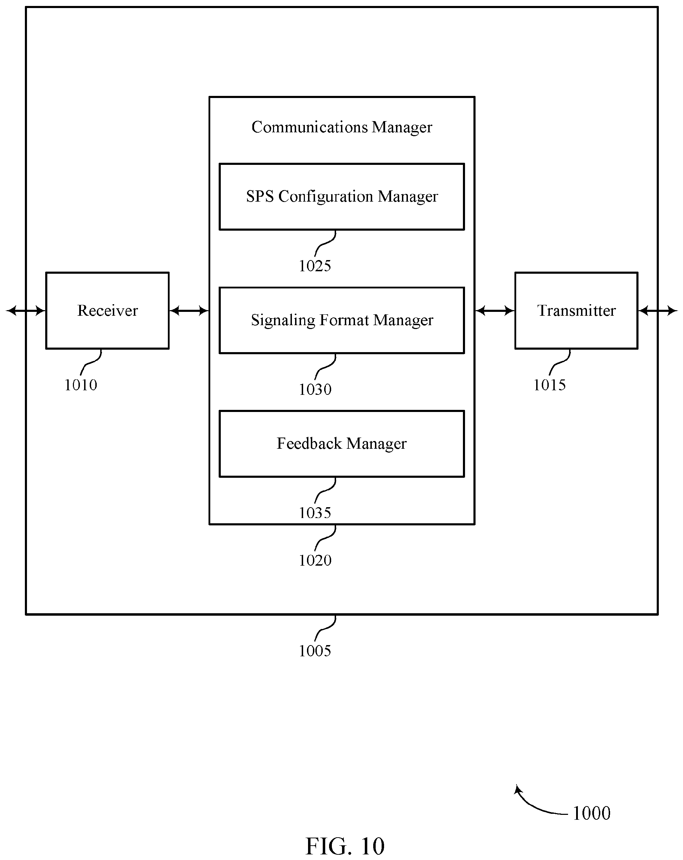

**FIG. 10** shows a block diagram 1000 of a device 1005 that supports techniques for deferring feedback upon uplink control channel collisions in accordance with aspects of the present disclosure. The device 1005 may be an example of aspects of a device 905 or a base station 105 as described herein. The device 1005 may include a receiver 1010, a transmitter 1015, and a communications manager 1020. The device 1005 may also include a processor. Each of these components may be in communication with one another (e.g., via one or more buses).

The receiver 1010 may provide a means for receiving information such as packets, user data, control information, or any combination thereof associated with various information channels (e.g., control channels, data channels, information channels related to techniques for deferring feedback upon uplink control channel collisions ). Information may be passed on to other components of the device 1005. The receiver 1010 may utilize a single antenna or a set of multiple antennas.

The transmitter 1015 may provide a means for transmitting signals generated by other components of the device 1005. For example, the transmitter 1015 may transmit information such as packets, user data, control information, or any combination thereof associated with various information channels (e.g., control channels, data channels, information channels related to techniques for deferring feedback upon uplink control channel collisions ). In some examples, the transmitter 1015 may be co-located with a receiver 1010 in a transceiver module. The transmitter 1015 may utilize a single antenna or a set of multiple antennas.

The device 1005, or various components thereof, may be an example of means for performing various aspects of techniques for deferring feedback upon uplink control channel collisions as described herein. For example, the communications manager 1020 may include an SPS configuration manager 1025, a signaling format manager 1030, a feedback manager 1035, or any combination thereof. The communications manager 1020 may be an example of aspects of a communications manager 920 as described herein. In some examples, the communications manager 1020, or various components thereof, may be configured to perform various operations (e.g., receiving, monitoring, transmitting) using or otherwise in cooperation with the receiver 1010, the transmitter 1015, or both. For example, the communications manager 1020 may receive information from the receiver 1010, send information to the transmitter 1015, or be integrated in combination with the receiver 1010, the transmitter 1015, or both to receive information, transmit information, or perform various other operations as described herein.

The communications manager 1020 may support wireless communications at a base station in accordance with examples as disclosed herein. The SPS configuration manager 1025 may be configured as or otherwise support a means for transmitting, to a UE, a first set of downlink transmissions of a first semi-persistent scheduling configuration and a second set of downlink transmissions of a second semi-persistent scheduling configuration, where a first set of feedback bits associated with the first set of downlink transmissions and a second set of feedback bits associated with the second set of downlink transmissions are scheduled for transmission to the base station in a first set of uplink symbols. The signaling format manager 1030 may be configured as or otherwise support a means for identifying, based on a change in format associated with the first set of uplink symbols, that at least a portion of the first set of uplink symbols is not available for transmission of the first set of feedback bits. The feedback manager 1035 may be configured as or otherwise support a means for receiving, from the UE, the first set of feedback bits and the second set of feedback bits in accordance with a feedback deferment pattern that defines a distribution of the feedback bits across a set of multiple uplink symbols subsequent to the first set of uplink symbols.

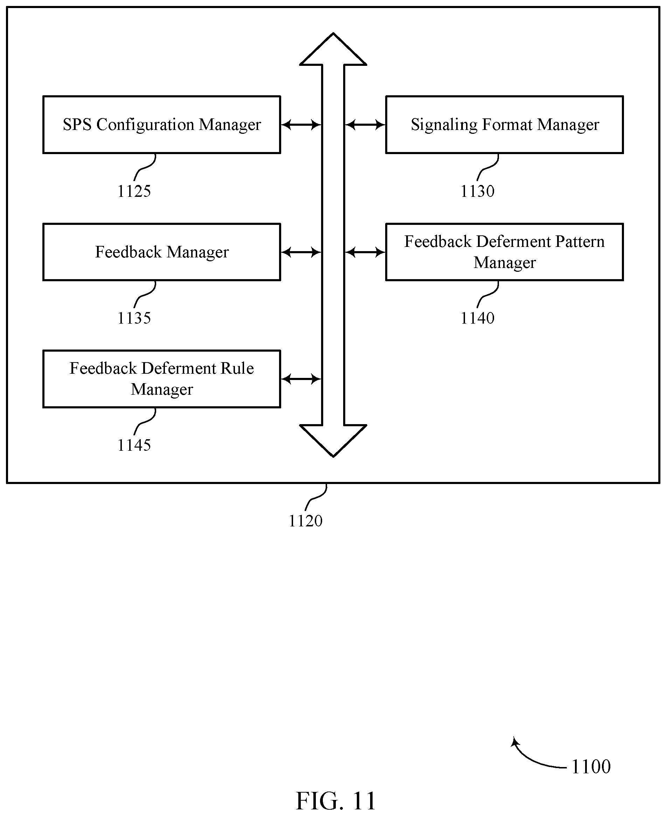

**FIG. 11** shows a block diagram 1100 of a communications manager 1120 that supports techniques for deferring feedback upon uplink control channel collisions in accordance with aspects of the present disclosure. The communications manager 1120 may be an example of aspects of a communications manager 920, a communications manager 1020, or both, as described herein. The communications manager 1120, or various components thereof, may be an example of means for performing various aspects of techniques for deferring feedback upon uplink control channel collisions as described herein. For example, the communications manager 1120 may include an SPS configuration manager 1125, a signaling format manager 1130, a feedback manager 1135, a feedback deferment pattern manager 1140, a feedback deferment rule manager 1145, or any combination thereof. Each of these components may communicate, directly or indirectly, with one another (e.g., via one or more buses).

The communications manager 1120 may support wireless communications at a base station in accordance with examples as disclosed herein. The SPS configuration manager 1125 may be configured as or otherwise support a means for transmitting, to a UE, a first set of downlink transmissions of a first semi-persistent scheduling configuration and a second set of downlink transmissions of a second semi-persistent scheduling configuration, where a first set of feedback bits associated with the first set of downlink transmissions and a second set of feedback bits associated with the second set of downlink transmissions are scheduled for transmission to the base station in a first set of uplink symbols. The signaling format manager 1130 may be configured as or otherwise support a means for identifying, based on a change in format associated with the first set of uplink symbols, that at least a portion of the first set of uplink symbols is not available for transmission of the first set of feedback bits. The feedback manager 1135 may be configured as or otherwise support a means for receiving, from the UE, the first set of feedback bits and the second set of feedback bits in accordance with a feedback deferment pattern that defines a distribution of the feedback bits across a set of multiple uplink symbols subsequent to the first set of uplink symbols.

In some examples, the feedback deferment pattern manager 1140 may be configured as or otherwise support a means for transmitting, to the UE, an indication of the feedback deferment pattern from a set of candidate feedback deferment patterns.

In some examples, to support transmitting the indication of the feedback deferment pattern, the feedback deferment pattern manager 1140 may be configured as or otherwise support a means for transmitting an identifier that is one of a set of multiple identifiers, where the set of multiple identifiers is indicative of one or more first feedback deferment patterns that each defines corresponding distributions of feedback bits across the set of multiple uplink symbols subsequent to the first set of uplink symbols, the set of multiple identifiers also being indicative of a second feedback deferment pattern that defines inclusion of all of the feedback bits in a second set of uplink symbols subsequent to the first set of uplink symbols.

In some examples, to support transmitting the indication of the feedback deferment pattern, the feedback deferment pattern manager 1140 may be configured as or otherwise support a means for transmitting a plurality of feedback bits comprising the first set of feedback bits and the second set of feedback bits in accordance with the feedback deferment pattern, wherein the plurality of feedback bits is associated with a plurality of semi-persistent scheduling configurations comprising the first semi-persistent scheduling configuration and the second semi-persistent scheduling configuration.

In some examples, to support transmitting the indication of the feedback deferment pattern, the feedback deferment pattern manager 1140 may be configured as or otherwise support a means for transmitting radio resource control signaling including the indication of the feedback deferment pattern, a downlink control information message including the indication of the feedback deferment pattern, a MAC control element (CE) including the indication of the feedback deferment pattern, or a combination thereof.

In some examples, the feedback deferment pattern manager 1140 may be configured as or otherwise support a means for determining that a set of multiple UEs including the UE are scheduled transmit uplink signaling during the first set of uplink symbols, the set of multiple uplink symbols, or both, where transmitting the indication of the feedback deferment pattern is based on the determining.

In some examples, the feedback deferment pattern manager 1140 may be configured as or otherwise support a means for identifying that the feedback deferment pattern defines the distribution of a first portion of the feedback bits to a first subset of the set of multiple uplink symbols subsequent to the first set of uplink symbols, and a second portion of the feedback bits to a second subset of the set of multiple uplink symbols subsequent to the first set of uplink symbols. In some examples, the first portion of the feedback bits is equal to the second portion of the feedback bits. In some examples, the first portion of the feedback bits is not equal to the second portion of the feedback bits.

In some examples, the feedback deferment pattern manager 1140 may be configured as or otherwise support a means for generating a third set of feedback bits associated with a third set of downlink transmissions of a third semi-persistent scheduling configuration, the third set of feedback bits scheduled for transmission to the base station in the first set of uplink symbols, and refraining from transmitting the third set of feedback bits in accordance with the feedback deferment pattern that defines the distribution of the feedback bits across the plurality of uplink symbols subsequent to the first set of uplink symbols.

In some examples, the feedback deferment rule manager 1145 may be configured as or otherwise support a means for identifying one or more rules including the feedback deferment pattern that defines the distribution of the feedback bits across the set of multiple uplink symbols subsequent to the first set of uplink symbols, where receiving the first set of feedback bits and the second set of feedback bits includes receiving the first set of feedback bits and the second set of feedback bits equally distributed across multiple subsets of the set of multiple uplink symbols, where a number of the multiple subsets is equal to a number of semi-persistent scheduling configurations including the first semi-persistent scheduling configuration and the second semi-persistent scheduling configuration.

In some examples, the feedback deferment rule manager 1145 may be configured as or otherwise support a means for transmitting, to the UE, an indication of the one or more rules.

In some examples, to support receiving the first set of feedback bits and the second set of feedback bits, the feedback manager 1135 may be configured as or otherwise support a means for receiving the first set of feedback bits and the second set of feedback bits that are ordered across the set of multiple uplink symbols ordered according to a prioritization based on a timing of the first set of uplink symbols.

In some examples, to support receiving the first set of feedback bits and the second set of feedback bits, the feedback manager 1135 may be configured as or otherwise support a means for receiving the first set of feedback bits and the second set of feedback bits that are ordered across the set of multiple uplink symbols ordered according to a priority level of the first semi-persistent scheduling configuration and a priority level of the second semi-persistent scheduling configuration.

In some examples, the first set of uplink symbols includes a first physical uplink control channel occasion, and where the set of multiple uplink symbols includes one or more additional physical uplink control channel occasions subsequent to the first physical uplink control channel occasion.

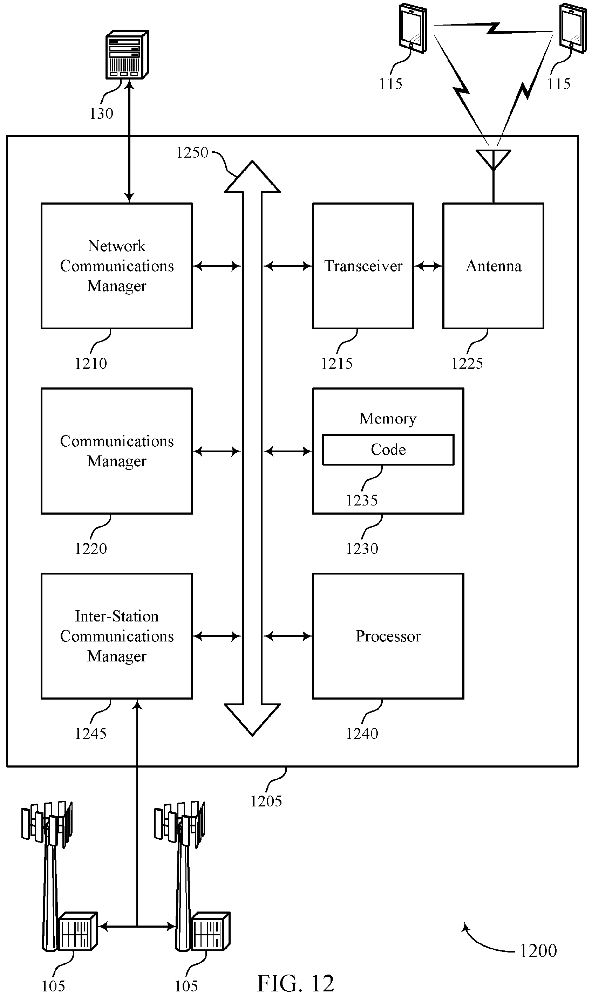

**FIG. 12** shows a diagram of a system 1200 including a device 1205 that supports techniques for deferring feedback upon uplink control channel collisions in accordance with aspects of the present disclosure. The device 1205 may be an example of or include the components of a device 905, a device 1005, or a base station 105 as described herein. The device 1205 may communicate wirelessly with one or more base stations 105, UEs 115, or any combination thereof. The device 1205 may include components for bi-directional voice and data communications including components for transmitting and receiving communications, such as a communications manager 1220, a network communications manager 1210, a transceiver 1215, an antenna 1225, a memory 1230, code 1235, a processor 1240, and an inter-station communications manager 1245. These components may be in electronic communication or otherwise coupled (e.g., operatively, communicatively, functionally, electronically, electrically) via one or more buses (e.g., a bus 1250).

The network communications manager 1210 may manage communications with a core network 130 (e.g., via one or more wired backhaul links). For example, the network communications manager 1210 may manage the transfer of data communications for client devices, such as one or more UEs 115.

In some cases, the device 1205 may include a single antenna 1225. However, in some other cases the device 1205 may have more than one antenna 1225, which may be capable of concurrently transmitting or receiving multiple wireless transmissions. The transceiver 1215 may communicate bi-directionally, via the one or more antennas 1225, wired, or wireless links as described herein. For example, the transceiver 1215 may represent a wireless transceiver and may communicate bi-directionally with another wireless transceiver. The transceiver 1215 may also include a modem to modulate the packets, to provide the modulated packets to one or more antennas 1225 for transmission, and to demodulate packets received from the one or more antennas 1225. The transceiver 1215, or the transceiver 1215 and one or more antennas 1225, may be an example of a transmitter 915, a transmitter 1015, a receiver 910, a receiver 1010, or any combination thereof or component thereof, as described herein.

The memory 1230 may include RAM and ROM. The memory 1230 may store computer-readable, computer-executable code 1235 including instructions that, when executed by the processor 1240, cause the device 1205 to perform various functions described herein. The code 1235 may be stored in a non-transitory computer-readable medium such as system memory or another type of memory. In some cases, the code 1235 may not be directly executable by the processor 1240 but may cause a computer (e.g., when compiled and executed) to perform functions described herein. In some cases, the memory 1230 may contain, among other things, a BIOS which may control basic hardware or software operation such as the interaction with peripheral components or devices.

The processor 1240 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1240 may be configured to operate a memory array using a memory controller. In some other cases, a memory controller may be integrated into the processor 1240. The processor 1240 may be configured to execute computer-readable instructions stored in a memory (e.g., the memory 1230) to cause the device 1205 to perform various functions (e.g., functions or tasks supporting techniques for deferring feedback upon uplink control channel collisions ). For example, the device 1205 or a component of the device 1205 may include a processor 1240 and memory 1230 coupled to the processor 1240, the processor 1240 and memory 1230 configured to perform various functions described herein.

The inter-station communications manager 1245 may manage communications with other base stations 105, and may include a controller or scheduler for controlling communications with UEs 115 in cooperation with other base stations 105. For example, the inter-station communications manager 1245 may coordinate scheduling for transmissions to UEs 115 for various interference mitigation techniques such as beamforming or joint transmission. In some examples, the inter-station communications manager 1245 may provide an X2 interface within an LTE/LTE-A wireless communications network technology to provide communication between base stations 105.

The communications manager 1220 may support wireless communications at a base station in accordance with examples as disclosed herein. For example, the communications manager 1220 may be configured as or otherwise support a means for transmitting, to a UE, a first set of downlink transmissions of a first semi-persistent scheduling configuration and a second set of downlink transmissions of a second semi-persistent scheduling configuration, where a first set of feedback bits associated with the first set of downlink transmissions and a second set of feedback bits associated with the second set of downlink transmissions are scheduled for transmission to the base station in a first set of uplink symbols. The communications manager 1220 may be configured as or otherwise support a means for identifying, based on a change in format associated with the first set of uplink symbols, that at least a portion of the first set of uplink symbols is not available for transmission of the first set of feedback bits. The communications manager 1220 may be configured as or otherwise support a means for receiving, from the UE, the first set of feedback bits and the second set of feedback bits in accordance with a feedback deferment pattern that defines a distribution of the feedback bits across a set of multiple uplink symbols subsequent to the first set of uplink symbols.

By including or configuring the communications manager 1220 in accordance with examples as described herein, the device 1205 may support techniques for communicating deferred SPS HARQ feedback bits, which may result in decreased system latency, decreased communications delays, more efficient use of computational resources, more efficient utilization of available resources, improved user experience, and the like.

In some examples, the communications manager 1220 may be configured to perform various operations (e.g., receiving, monitoring, transmitting) using or otherwise in cooperation with the transceiver 1215, the one or more antennas 1225, or any combination thereof. Although the communications manager 1220 is illustrated as a separate component, in some examples, one or more functions described with reference to the communications manager 1220 may be supported by or performed by the processor 1240, the memory 1230, the code 1235, or any combination thereof. For example, the code 1235 may include instructions executable by the processor 1240 to cause the device 1205 to perform various aspects of techniques for deferring feedback upon uplink control channel collisions as described herein, or the processor 1240 and the memory 1230 may be otherwise configured to perform or support such operations.

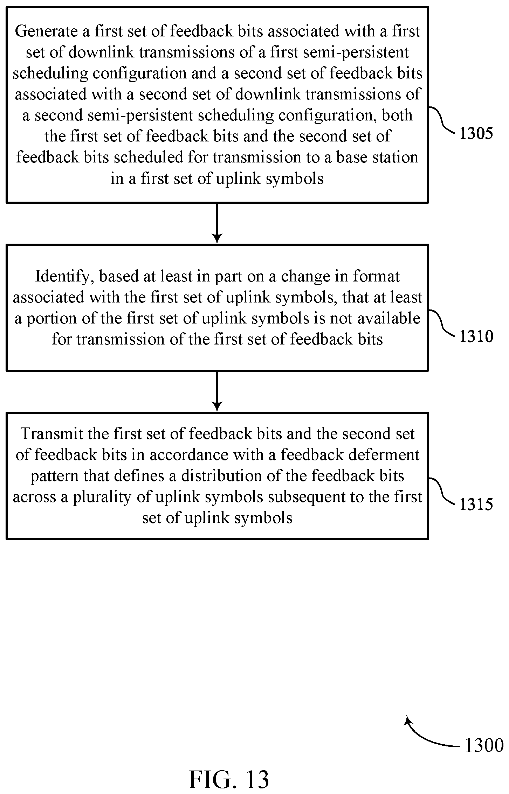

**FIG. 13** shows a flowchart illustrating a method 1300 that supports techniques for deferring feedback upon uplink control channel collisions in accordance with aspects of the present disclosure. The operations of the method 1300 may be implemented by a UE or its components as described herein. For example, the operations of the method 1300 may be performed by a UE 115 as described with reference to FIGs. 1 through 8. In some examples, a UE may execute a set of instructions to control the functional elements of the UE to perform the described functions. Additionally, or alternatively, the UE may perform aspects of the described functions using special-purpose hardware.

At 1305, the method may include generating a first set of feedback bits associated with a first set of downlink transmissions of a first semi-persistent scheduling configuration and a second set of feedback bits associated with a second set of downlink transmissions of a second semi-persistent scheduling configuration, both the first set of feedback bits and the second set of feedback bits scheduled for transmission to a base station in a first set of uplink symbols. The operations of 1305 may be performed in accordance with examples as disclosed herein. In some examples, aspects of the operations of 1305 may be performed by a feedback manager 725 as described with reference to FIG. 7.

At 1310, the method may include identifying, based on a change in format associated with the first set of uplink symbols, that at least a portion of the first set of uplink symbols is not available for transmission of the first set of feedback bits. The operations of 1310 may be performed in accordance with examples as disclosed herein. In some examples, aspects of the operations of 1310 may be performed by a signaling format manager 730 as described with reference to FIG. 7.

At 1315, the method may include transmitting the first set of feedback bits and the second set of feedback bits in accordance with a feedback deferment pattern that defines a distribution of the feedback bits across a set of multiple uplink symbols subsequent to the first set of uplink symbols. The operations of 1315 may be performed in accordance with examples as disclosed herein. In some examples, aspects of the operations of 1315 may be performed by a feedback deferment pattern manager 735 as described with reference to FIG. 7.

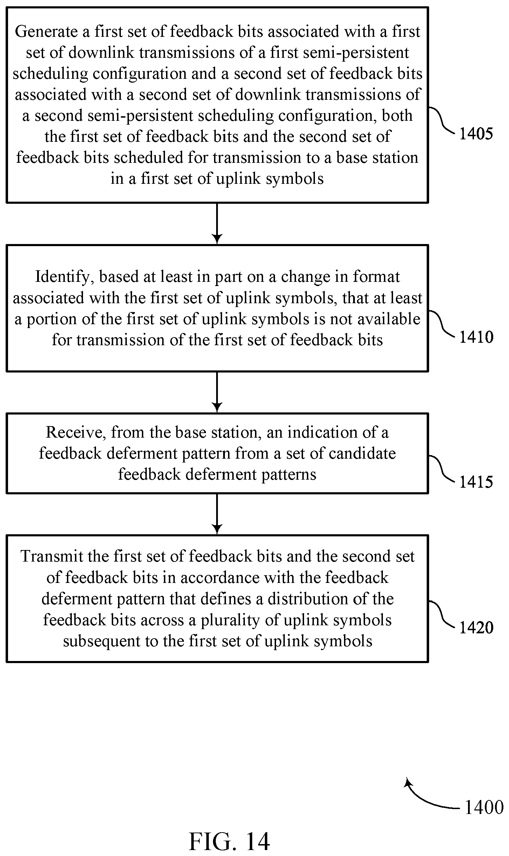

**FIG. 14** shows a flowchart illustrating a method 1400 that supports techniques for deferring feedback upon uplink control channel collisions in accordance with aspects of the present disclosure. The operations of the method 1400 may be implemented by a UE or its components as described herein. For example, the operations of the method 1400 may be performed by a UE 115 as described with reference to FIGs. 1 through 8. In some examples, a UE may execute a set of instructions to control the functional elements of the UE to perform the described functions. Additionally, or alternatively, the UE may perform aspects of the described functions using special-purpose hardware.

At 1405, the method includes, as claimed, generating a first set of feedback bits associated with a first set of downlink transmissions of a first semi-persistent scheduling configuration and a second set of feedback bits associated with a second set of downlink transmissions of a second semi-persistent scheduling configuration, both the first set of feedback bits and the second set of feedback bits scheduled for transmission to a base station in a first set of uplink symbols. The operations of 1405 may be performed in accordance with examples as disclosed herein. In some examples, aspects of the operations of 1405 may be performed by a feedback manager 725 as described with reference to FIG. 7.

At 1410, the method includes, as claimed, identifying, based on a change in format associated with the first set of uplink symbols, that at least a portion of the first set of uplink symbols is not available for transmission of the first set of feedback bits. The operations of 1410 may be performed in accordance with examples as disclosed herein. In some examples, aspects of the operations of 1410 may be performed by a signaling format manager 730 as described with reference to FIG. 7.

At 1415, the method includes, as claimed, receiving, from the base station, an indication of a feedback deferment pattern from a set of candidate feedback deferment patterns. The operations of 1415 may be performed in accordance with examples as disclosed herein. In some examples, aspects of the operations of 1415 may be performed by a feedback deferment pattern manager 735 as described with reference to FIG. 7.

At 1420, the method includes, as claimed, transmitting the first set of feedback bits and the second set of feedback bits in accordance with the feedback deferment pattern that defines a distribution of the feedback bits across a set of multiple uplink symbols subsequent to the first set of uplink symbols. The operations of 1420 may be performed in accordance with examples as disclosed herein. In some examples, aspects of the operations of 1420 may be performed by a feedback deferment pattern manager 735 as described with reference to FIG. 7.

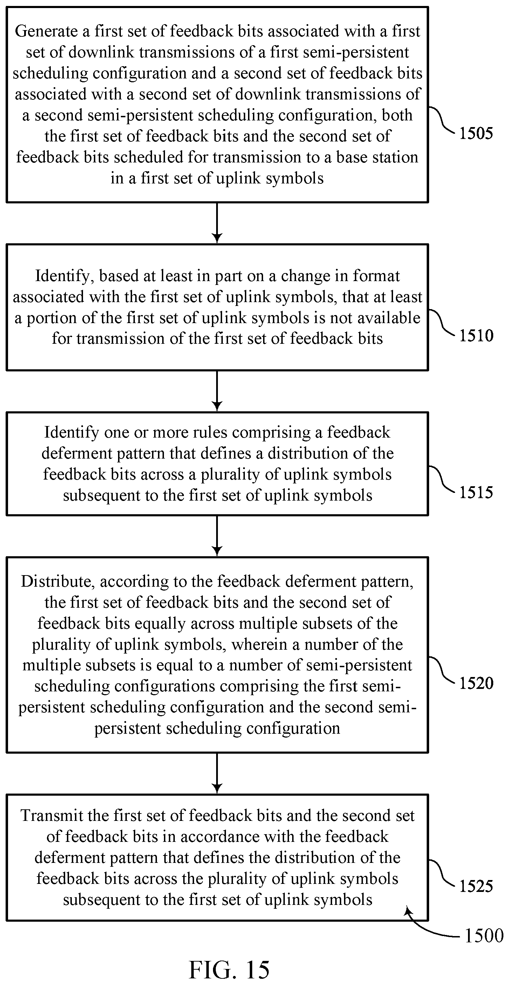

**FIG. 15** shows a flowchart illustrating a method 1500 that supports techniques for deferring feedback upon uplink control channel collisions in accordance with aspects of the present disclosure. The operations of the method 1500 may be implemented by a UE or its components as described herein. For example, the operations of the method 1500 may be performed by a UE 115 as described with reference to FIGs. 1 through 8. In some examples, a UE may execute a set of instructions to control the functional elements of the UE to perform the described functions. Additionally, or alternatively, the UE may perform aspects of the described functions using special-purpose hardware.

At 1505, the method may include generating a first set of feedback bits associated with a first set of downlink transmissions of a first semi-persistent scheduling configuration and a second set of feedback bits associated with a second set of downlink transmissions of a second semi-persistent scheduling configuration, both the first set of feedback bits and the second set of feedback bits scheduled for transmission to a base station in a first set of uplink symbols. The operations of 1505 may be performed in accordance with examples as disclosed herein. In some examples, aspects of the operations of 1505 may be performed by a feedback manager 725 as described with reference to FIG. 7.

At 1510, the method may include identifying, based on a change in format associated with the first set of uplink symbols, that at least a portion of the first set of uplink symbols is not available for transmission of the first set of feedback bits. The operations of 1510 may be performed in accordance with examples as disclosed herein. In some examples, aspects of the operations of 1510 may be performed by a signaling format manager 730 as described with reference to FIG. 7.

At 1515, the method may include identifying one or more rules including a feedback deferment pattern that defines a distribution of the feedback bits across a set of multiple uplink symbols subsequent to the first set of uplink symbols. The operations of 1515 may be performed in accordance with examples as disclosed herein. In some examples, aspects of the operations of 1515 may be performed by a feedback deferment rule manager 740 as described with reference to FIG. 7.

At 1520, the method may include distributing, according to the feedback deferment pattern, the first set of feedback bits and the second set of feedback bits equally across multiple subsets of the set of multiple uplink symbols, where a number of the multiple subsets is equal to a number of semi-persistent scheduling configurations including the first semi-persistent scheduling configuration and the second semi-persistent scheduling configuration. The operations of 1520 may be performed in accordance with examples as disclosed herein. In some examples, aspects of the operations of 1520 may be performed by a feedback deferment rule manager 740 as described with reference to FIG. 7.

At 1525, the method may include transmitting the first set of feedback bits and the second set of feedback bits in accordance with the feedback deferment pattern that defines the distribution of the feedback bits across the set of multiple uplink symbols subsequent to the first set of uplink symbols. The operations of 1525 may be performed in accordance with examples as disclosed herein. In some examples, aspects of the operations of 1525 may be performed by a feedback deferment pattern manager 735 as described with reference to FIG. 7.

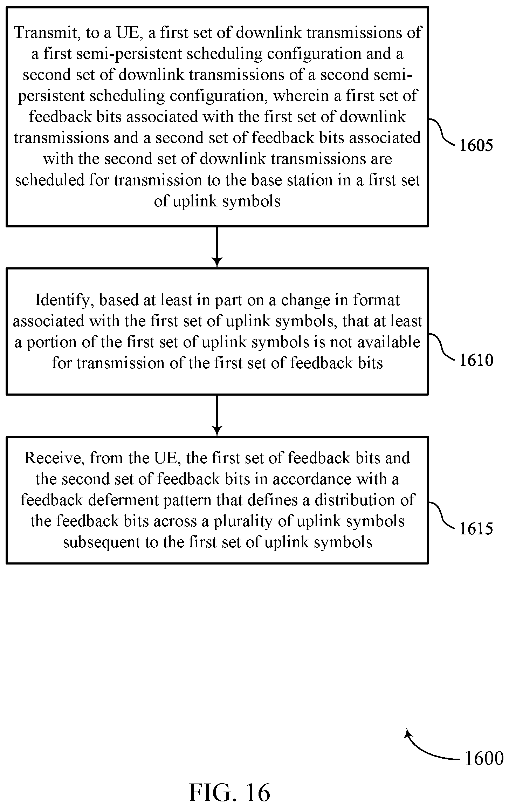

**FIG. 16** shows a flowchart illustrating a method 1600 that supports techniques for deferring feedback upon uplink control channel collisions in accordance with aspects of the present disclosure. The operations of the method 1600 may be implemented by a base station or its components as described herein. For example, the operations of the method 1600 may be performed by a base station 105 as described with reference to FIGs. 1 through 4 and 9 through 12. In some examples, a base station may execute a set of instructions to control the functional elements of the base station to perform the described functions. Additionally, or alternatively, the base station may perform aspects of the described functions using special-purpose hardware.

At 1605, the method includes, as claimed, transmitting, to a UE, a first set of downlink transmissions of a first semi-persistent scheduling configuration and a second set of downlink transmissions of a second semi-persistent scheduling configuration, where a first set of feedback bits associated with the first set of downlink transmissions and a second set of feedback bits associated with the second set of downlink transmissions are scheduled for transmission to the base station in a first set of uplink symbols. The operations of 1605 may be performed in accordance with examples as disclosed herein. In some examples, aspects of the operations of 1605 may be performed by an SPS configuration manager 1125 as described with reference to FIG. 11.

At 1610, the method includes, as claimed, identifying, based on a change in format associated with the first set of uplink symbols, that at least a portion of the first set of uplink symbols is not available for transmission of the first set of feedback bits. The operations of 1610 may be performed in accordance with examples as disclosed herein. In some examples, aspects of the operations of 1610 may be performed by a signaling format manager 1130 as described with reference to FIG. 11.

At 1615, the method includes, as claimed, receiving, from the UE, the first set of feedback bits and the second set of feedback bits in accordance with a feedback deferment pattern that defines a distribution of the feedback bits across a set of multiple uplink symbols subsequent to the first set of uplink symbols. The operations of 1615 may be performed in accordance with examples as disclosed herein. In some examples, aspects of the operations of 1615 may be performed by a feedback manager 1135 as described with reference to FIG. 11.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

## Claims

1. A method (1400) for wireless communications at a user equipment, UE, comprising:
generating (1405) a first set of feedback bits associated with a first set of downlink transmissions of a first semi-persistent scheduling configuration and a second set of feedback bits associated with a second set of downlink transmissions of a second semi-persistent scheduling configuration, both the first set of feedback bits and the second set of feedback bits scheduled for transmission to a base station (115) in a first set of uplink symbols;
identifying (1410), based at least in part on a change in format associated with the first set of uplink symbols, that at least a portion of the first set of uplink symbols is not available for transmission of the first set of feedback bits;
receiving (1415), from the base station (115), an indication of a feedback deferment pattern from a set of candidate feedback deferment patterns, wherein receiving the indication of the feedback deferment pattern further comprises receiving an identifier that is one of a plurality of identifiers, wherein the plurality of identifiers is indicative of one or more first feedback deferment patterns that each defines corresponding distributions of feedback bits across the plurality of uplink symbols subsequent to the first set of uplink symbols, the plurality of identifiers also being indicative of a second feedback deferment pattern that defines inclusion of all of the feedback bits in a second set of uplink symbols subsequent to the first set of uplink symbols; and
transmitting (1420) the first set of feedback bits and the second set of feedback bits in accordance with the feedback deferment pattern.

2. The method (1400) of claim 1, wherein receiving the indication of the feedback deferment pattern comprises:
receiving radio resource control signaling comprising the indication of the feedback deferment pattern, a downlink control information message comprising the indication of the feedback deferment pattern, a media access control, MAC control element, CE comprising the indication of the feedback deferment pattern, or a combination thereof.

3. The method (1400) of claim 1, further comprising:
identifying that the feedback deferment pattern defines the distribution of a first portion of the feedback bits to a first subset of the plurality of uplink symbols subsequent to the first set of uplink symbols, and a second portion of the feedback bits to a second subset of the plurality of uplink symbols subsequent to the first set of uplink symbols.

4. The method (1400) of claim 3, wherein the first portion of the feedback bits is equal to the second portion of the feedback bits.

5. The method (1400) of claim 3, wherein the first portion of the feedback bits is not equal to the second portion of the feedback bits.

6. The method (1400) of claim 1, further comprising:
identifying one or more rules comprising the feedback deferment pattern that defines the distribution of the feedback bits across the plurality of uplink symbols subsequent to the first set of uplink symbols; and
distributing, according to the feedback deferment pattern, the first set of feedback bits and the second set of feedback bits equally across multiple subsets of the plurality of uplink symbols, wherein a number of the multiple subsets is equal to a number of semi-persistent scheduling configurations comprising the first semi-persistent scheduling configuration and the second semi-persistent scheduling configuration, further comprising:
receiving, from the base station (115), an indication of the one or more rules.

7. The method (1400) of claim 1, further comprising:
ordering the first set of feedback bits and the second set of feedback bits according to a prioritization based at least in part on a timing of the first set of uplink symbols; and
distributing, according to the feedback deferment pattern and the ordering, the first set of feedback bits and the second set of feedback bits across the plurality of uplink symbols subsequent to the first set of uplink symbols.

8. The method (1400) of claim 1, further comprising:
ordering the first set of feedback bits and the second set of feedback bits according to a priority level of the first semi-persistent scheduling configuration and a priority level of the second semi-persistent scheduling configuration; and
distributing, according to the feedback deferment pattern and the ordering, the first set of feedback bits and the second set of feedback bits across the plurality of uplink symbols subsequent to the first set of uplink symbols.

9. The method (1400) of claim 1, wherein the first set of uplink symbols comprises a first physical uplink control channel occasion, and where the plurality of uplink symbols comprises one or more additional physical uplink control channel occasions subsequent to the first physical uplink control channel occasion.

10. The method (1400) of claim 1, wherein transmitting the first set of feedback bits and the second set of feedback bits comprises:
transmitting a plurality of feedback bits comprising the first set of feedback bits and the second set of feedback bits in accordance with the feedback deferment pattern, wherein the plurality of feedback bits is associated with a plurality of semi-persistent scheduling configurations comprising the first semi-persistent scheduling configuration and the second semi-persistent scheduling configuration.

11. The method (1400) of claim 1, further comprising:
generating a third set of feedback bits associated with a third set of downlink transmissions of a third semi-persistent scheduling configuration, the third set of feedback bits scheduled for transmission to the base station (115) in the first set of uplink symbols; and
refraining from transmitting the third set of feedback bits in accordance with the feedback deferment pattern that defines the distribution of the feedback bits across the plurality of uplink symbols subsequent to the first set of uplink symbols.

12. An apparatus for wireless communications, comprising means configured for executing the method (1400) of any one of claims 1 to 11.

13. A method (1600) for wireless communications at a base station (115), comprising:
transmitting (1605), to a user equipment, UE, a first set of downlink transmissions of a first semi-persistent scheduling configuration and a second set of downlink transmissions of a second semi-persistent scheduling configuration, wherein a first set of feedback bits associated with the first set of downlink transmissions and a second set of feedback bits associated with the second set of downlink transmissions are scheduled for transmission to the base station (115) in a first set of uplink symbols;
identifying (1610), based at least in part on a change in format associated with the first set of uplink symbols, that at least a portion of the first set of uplink symbols is not available for transmission of the first set of feedback bits;
transmitting, to the UE (105), an indication of a feedback deferment pattern from a set of candidate feedback deferment patterns, wherein transmitting the indication of the feedback deferment pattern further comprises transmitting an identifier that is one of a plurality of identifiers, wherein the plurality of identifiers is indicative of one or more first feedback deferment patterns that each defines corresponding distributions of feedback bits across the plurality of uplink symbols subsequent to the first set of uplink symbols, the plurality of identifiers also being indicative of a second feedback deferment pattern that defines inclusion of all of the feedback bits in a second set of uplink symbols subsequent to the first set of uplink symbols; and
receiving (1615), from the UE (105), the first set of feedback bits and the second set of feedback bits in accordance with the feedback deferment pattern.

14. An apparatus for wireless communications, comprising means configured for executing the method (1400) of claim 13.

15. A computer program comprising program instructions which, when the program is executed by a computer, carry out all steps of the method (1400) of anyone of claims 1 to 11 or 13.

## Patentansprüche

1. Verfahren (1400) zur drahtlosen Kommunikation an einem Benutzergerät, UE, umfassend:
Erzeugen (1405) eines ersten Satzes von Feedback-Bits, die mit einem ersten Satz von Downlink-Übertragungen einer ersten semi-persistenten Scheduling-Konfiguration assoziiert sind, und eines zweiten Satzes von Feedback-Bits, die mit einem zweiten Satz von Downlink-Übertragungen einer zweiten semi-persistenten Scheduling-Konfiguration assoziiert sind, wobei sowohl der erste Satz von Feedback-Bits als auch der zweite Satz von Feedback-Bits zur Übertragung an eine Basisstation (115) in einem ersten Satz von Uplink-Symbolen gescheduled sind;
Identifizieren (1410), zumindest teilweise basierend auf einer mit dem ersten Satz von Uplink-Symbolen verbundenen Formatänderung, dass zumindest ein Teil des ersten Satzes von Uplink-Symbolen nicht zur Übertragung des ersten Satzes von Feedback-Bits verfügbar ist;
Empfangen (1415), von der Basisstation (115), einer Anzeige eines Feedback-Verzögerungsmusters aus einem Satz von Kandidaten-Feedback-Verzögerungsmustern, wobei das Empfangen der Anzeige des Feedback-Verzögerungsmusters weiterhin das Empfangen einer Kennung umfasst, die eine aus einer Vielzahl von Kennungen ist, wobei die Vielzahl von Kennungen ein oder mehrere erste Feedback-Verzögerungsmuster anzeigt, die jeweils entsprechende Verteilungen von Feedback-Bits über die Vielzahl von Uplink-Symbolen nach dem ersten Satz von Uplink-Symbolen definieren, wobei die Vielzahl von Kennungen auch ein zweites Feedback-Verzögerungsmuster anzeigt, das die Einbeziehung aller Feedback-Bits in einen zweiten Satz von Uplink-Symbolen nach dem ersten Satz von Uplink-Symbolen definiert; und
Übertragen (1420) des ersten Satzes von Feedback-Bits und des zweiten Satzes von Feedback-Bits gemäß dem Feedback-Verzögerungsmuster.

2. Verfahren (1400) gemäß Anspruch 1, wobei das Empfangen der Anzeige des Feedback-Verzögerungsmusters umfasst:
Empfangen einer Funkressourcenkontroll-Signalisierung, die die Anzeige des Feedback-Verzögerungsmusters umfasst, einer Downlink-Kontroll-Information-Nachricht, die die Anzeige des Feedback-Verzögerungsmusters umfasst, eines Media Access Control, MAC, Kontrollelements, CE, das die Anzeige des Feedback-Verzögerungsmusters umfasst, oder einer Kombination davon.

3. Verfahren (1400) gemäß Anspruch 1, weiterhin umfassend:
Identifizieren, dass das Feedback-Verzögerungsmuster die Verteilung eines ersten Teils der Feedback-Bits auf eine erste Teilmenge der Vielzahl von Uplink-Symbolen nach dem ersten Satz von Uplink-Symbolen und eines zweiten Teils der Feedback-Bits auf eine zweite Teilmenge der Vielzahl von Uplink-Symbolen nach dem ersten Satz von Uplink-Symbolen definiert.

4. Verfahren (1400) gemäß Anspruch 3, wobei der erste Teil der Feedback-Bits gleich dem zweiten Teil der Feedback-Bits ist.

5. Verfahren (1400) gemäß Anspruch 3, wobei der erste Teil der Feedback-Bits nicht gleich dem zweiten Teil der Feedback-Bits ist.

6. Verfahren (1400) gemäß Anspruch 1, weiterhin umfassend:
Identifizieren einer oder mehrerer Regeln, die das Feedback-Verzögerungsmuster umfassen, das die Verteilung der Feedback-Bits über die Vielzahl von Uplink-Symbolen nach dem ersten Satz von Uplink-Symbolen definiert; und
Verteilen, gemäß dem Feedback-Verzögerungsmuster, des ersten Satzes von Feedback-Bits und des zweiten Satzes von Feedback-Bits gleichmäßig über mehrere Teilmengen der Vielzahl von Uplink-Symbolen, wobei eine Anzahl der mehreren Teilmengen gleich einer Anzahl von semi-persistenten Scheduling-Konfigurationen ist, die die erste semi-persistente Scheduling-Konfiguration und die zweite semi-persistente Scheduling-Konfiguration umfassen, weiterhin umfassend:
Empfangen, von der Basisstation (115), einer Anzeige der einen oder mehreren Regeln.

7. Verfahren (1400) gemäß Anspruch 1, weiterhin umfassend:
Ordnen des ersten Satzes von Feedback-Bits und des zweiten Satzes von Feedback-Bits gemäß einer Priorisierung basierend zumindest teilweise auf einem Timing des ersten Satzes von Uplink-Symbolen; und
Verteilen, gemäß dem Feedback-Verzögerungsmuster und der Ordnung, des ersten Satzes von Feedback-Bits und des zweiten Satzes von Feedback-Bits über die Vielzahl von Uplink-Symbolen nach dem ersten Satz von Uplink-Symbolen.

8. Verfahren (1400) gemäß Anspruch 1, weiterhin umfassend:
Ordnen des ersten Satzes von Feedback-Bits und des zweiten Satzes von Feedback-Bits gemäß einer Prioritätsstufe der ersten semi-persistenten Scheduling-Konfiguration und einer Prioritätsstufe der zweiten semi-persistenten Scheduling-Konfiguration; und
Verteilen, gemäß dem Feedback-Verzögerungsmuster und der Ordnung, des ersten Satzes von Feedback-Bits und des zweiten Satzes von Feedback-Bits über die Vielzahl von Uplink-Symbolen nach dem ersten Satz von Uplink-Symbolen.

9. Verfahren (1400) gemäß Anspruch 1, wobei der erste Satz von Uplink-Symbolen eine erste physikalische Uplink-Kontrollkanalgelegenheit umfasst, und wobei die Vielzahl von Uplink-Symbolen eine oder mehrere zusätzliche physikalische Uplink-Kontrollkanalgelegenheiten nach der ersten physikalischen Uplink-Kontrollkanalgelegenheit umfasst.

10. Verfahren (1400) gemäß Anspruch 1, wobei das Übertragen des ersten Satzes von Feedback-Bits und des zweiten Satzes von Feedback-Bits umfasst:
Übertragen mehrerer Feedback-Bits, die den ersten Satz von Feedback-Bits und den zweiten Satz von Feedback-Bits umfassen, gemäß dem Feedback-Verzögerungsmuster, wobei mehreren Feedback-Bits mit mehreren semi-persistenten Scheduling-Konfigurationen assoziiert ist, die die erste semi-persistente Scheduling-Konfiguration und die zweite semi-persistente Scheduling-Konfiguration umfassen.

11. Verfahren (1400) gemäß Anspruch 1, weiterhin umfassend:
Erzeugen eines dritten Satzes von Feedback-Bits, die mit einem dritten Satz von Downlink-Übertragungen einer dritten semi-persistenten Scheduling-Konfiguration assoziiert sind, wobei der dritte Satz von Feedback-Bits zur Übertragung an die Basisstation (115) in dem ersten Satz von Uplink-Symbolen gescheduled ist; und
Unterlassen des Übertragens des dritten Satzes von Feedback-Bits gemäß dem Feedback-Verzögerungsmuster, das die Verteilung der Feedback-Bits über die Vielzahl von Uplink-Symbolen nach dem ersten Satz von Uplink-Symbolen definiert.

12. Vorrichtung zur drahtlosen Kommunikation, umfassend Mittel, die zum Ausführen des Verfahrens (1400) gemäß einem der Ansprüche 1 bis 11 konfiguriert sind.

13. Verfahren (1600) zur drahtlosen Kommunikation an einer Basisstation (115), umfassend:
Übertragen (1605), an ein Benutzergerät, UE, eines ersten Satzes von Downlink-Übertragungen einer ersten semi-persistenten Scheduling-Konfiguration und eines zweiten Satzes von Downlink-Übertragungen einer zweiten semi-persistenten Scheduling-Konfiguration, wobei ein erster Satz von Feedback-Bits, die mit dem ersten Satz von Downlink-Übertragungen assoziiert sind, und ein zweiter Satz von Feedback-Bits, die mit dem zweiten Satz von Downlink-Übertragungen assoziiert sind, zur Übertragung an die Basisstation (115) in einem ersten Satz von Uplink-Symbolen gescheduled sind;
Identifizieren (1610), zumindest teilweise basierend auf einer mit dem ersten Satz von Uplink-Symbolen verbundenen Formatänderung, dass zumindest ein Teil des ersten Satzes von Uplink-Symbolen nicht zur Übertragung des ersten Satzes von Feedback-Bits verfügbar ist;
Übertragen, an das UE (105), einer Anzeige eines Feedback-Verzögerungsmusters aus einem Satz von Kandidaten-Feedback-Verzögerungsmustern, wobei das Übertragen der Anzeige des Feedback-Verzögerungsmusters weiterhin das Übertragen einer Kennung umfasst, die eine aus einer Vielzahl von Kennungen ist, wobei die Vielzahl von Kennungen ein oder mehrere erste Feedback-Verzögerungsmuster anzeigt, die jeweils entsprechende Verteilungen von Feedback-Bits über die Vielzahl von Uplink-Symbolen nach dem ersten Satz von Uplink-Symbolen definieren, wobei die Vielzahl von Kennungen auch ein zweites Feedback-Verzögerungsmuster anzeigt, das die Einbeziehung aller Feedback-Bits in einen zweiten Satz von Uplink-Symbolen nach dem ersten Satz von Uplink-Symbolen definiert; und
Empfangen (1615), von dem UE (105), des ersten Satzes von Feedback-Bits und des zweiten Satzes von Feedback-Bits gemäß dem Feedback-Verzögerungsmuster.

14. Vorrichtung zur drahtlosen Kommunikation, umfassend Mittel, die zum Ausführen des Verfahrens (1400) gemäß Anspruch 13 konfiguriert sind.

15. Computerprogramm, umfassend Programmanweisungen, die, wenn das Programm von einem Computer ausgeführt wird, alle Schritte des Verfahrens (1400) gemäß einem der Ansprüche 1 bis 11 oder 13 ausführen.

## Revendications

1. Un procédé (1400) de communication sans fil au niveau d'un équipement utilisateur, UE, comprenant :
la génération (1405) d'un premier ensemble de bits de retour associés à un premier ensemble de transmissions de liaison descendante d'une première configuration de planification semi-persistante, et d'un deuxième ensemble de bits de retour associés à un deuxième ensemble de transmissions de liaison descendante d'une deuxième configuration de planification semi-persistante, le premier ensemble de bits de retour et le deuxième ensemble de bits de retour étant tous deux planifiés pour être transmis à une station de base (115) dans un premier ensemble de symboles de liaison montante ;
l'identification (1410), sur la base au moins en partie d'un changement de format associé au premier ensemble de symboles de liaison montante, qu'au moins une partie du premier ensemble de symboles de liaison montante n'est pas disponible pour la transmission du premier ensemble de bits de retour ;
la réception (1415), à partir de la station de base (115), d'une indication d'un modèle de report de retour parmi un ensemble de modèles de report de retour candidats, dans lequel la réception de l'indication du modèle de report de retour comprend en outre la réception d'un identifiant qui est l'un parmi une pluralité d'identifiants, dans lequel la pluralité d'identifiants est indicative d'un ou plusieurs premiers modèles de report de retour qui définissent chacun des distributions correspondantes de bits de retour sur la pluralité de symboles de liaison montante suivant le premier ensemble de symboles de liaison montante, la pluralité d'identifiants étant également indicative d'un second modèle de report de retour qui définit l'inclusion de tous les bits de retour dans un deuxième ensemble de symboles de liaison montante suivant le premier ensemble de symboles de liaison montante ; et
la transmission (1420) du premier ensemble de bits de retour et du deuxième ensemble de bits de retour conformément au modèle de report de retour.

2. Le procédé (1400) selon la revendication 1, dans lequel la réception de l'indication du modèle de report de retour comprend :
la réception d'une signalisation de contrôle de ressources radio comprenant l'indication du modèle de report de retour, d'un message d'information de contrôle de liaison descendante comprenant l'indication du modèle de report de retour, d'un élément de contrôle, CE, de contrôle d'accès au support, MAC, comprenant l'indication du modèle de report de retour, ou d'une combinaison de ceux-ci.

3. Le procédé (1400) selon la revendication 1, comprenant en outre :
l'identification que le modèle de report de retour définit la distribution d'une première partie des bits de retour à un premier sous-ensemble de la pluralité de symboles de liaison montante suivant le premier ensemble de symboles de liaison montante, et d'une seconde partie des bits de retour à un second sous-ensemble de la pluralité de symboles de liaison montante suivant le premier ensemble de symboles de liaison montante.

4. Le procédé (1400) selon la revendication 3, dans lequel la première partie des bits de retour est égale à la seconde partie des bits de retour.

5. Le procédé (1400) selon la revendication 3, dans lequel la première partie des bits de retour n'est pas égale à la seconde partie des bits de retour.

6. Le procédé (1400) selon la revendication 1, comprenant en outre :
l'identification d'une ou plusieurs règles comprenant le modèle de report de retour qui définit la distribution des bits de retour sur la pluralité de symboles de liaison montante suivant le premier ensemble de symboles de liaison montante ; et
la distribution, selon le modèle de report de retour, du premier ensemble de bits de retour et du deuxième ensemble de bits de retour de manière égale sur plusieurs sous-ensembles de la pluralité de symboles de liaison montante, dans lequel un nombre des multiples sous-ensembles est égal à un nombre de configurations de planification semi-persistantes comprenant la première configuration de planification semi-persistante et la deuxième configuration de planification semi-persistante, comprenant en outre :
la réception, à partir de la station de base (115), d'une indication des une ou plusieurs règles.

7. Le procédé (1400) selon la revendication 1, comprenant en outre :
l'ordonnancement du premier ensemble de bits de retour et du deuxième ensemble de bits de retour selon une priorisation basée au moins en partie sur un séquencement du premier ensemble de symboles de liaison montante ; et
la distribution, selon le modèle de report de retour et l'ordonnancement, du premier ensemble de bits de retour et du deuxième ensemble de bits de retour sur la pluralité de symboles de liaison montante suivant le premier ensemble de symboles de liaison montante.

8. Le procédé (1400) selon la revendication 1, comprenant en outre :
l'ordonnancement du premier ensemble de bits de retour et du deuxième ensemble de bits de retour selon un niveau de priorité de la première configuration de planification semi-persistante et un niveau de priorité de la deuxième configuration de planification semi-persistante ; et
la distribution, selon le modèle de report de retour et l'ordonnancement, du premier ensemble de bits de retour et du deuxième ensemble de bits de retour sur la pluralité de symboles de liaison montante suivant le premier ensemble de symboles de liaison montante.

9. Le procédé (1400) selon la revendication 1, dans lequel le premier ensemble de symboles de liaison montante comprend une première occasion de canal physique de contrôle de liaison montante, et dans lequel la pluralité de symboles de liaison montante comprend une ou plusieurs occasions de canal physique de contrôle de liaison montante supplémentaires suivant la première occasion de canal physique de contrôle de liaison montante.

10. Le procédé (1400) selon la revendication 1, dans lequel la transmission du premier ensemble de bits de retour et du deuxième ensemble de bits de retour comprend :
la transmission d'une pluralité de bits de retour comprenant le premier ensemble de bits de retour et le deuxième ensemble de bits de retour conformément au modèle de report de retour, dans lequel la pluralité de bits de retour est associée à une pluralité de configurations de planification semi-persistantes comprenant la première configuration de planification semi-persistante et la deuxième configuration de planification semi-persistante.

11. Le procédé (1400) selon la revendication 1, comprenant en outre :
la génération d'un troisième ensemble de bits de retour associés à un troisième ensemble de transmissions de liaison descendante d'une troisième configuration de planification semi-persistante, le troisième ensemble de bits de retour étant planifié pour être transmis à la station de base (115) dans le premier ensemble de symboles de liaison montante ; et
la non-transmission du troisième ensemble de bits de retour conformément au modèle de report de retour qui définit la distribution des bits de retour sur la pluralité de symboles de liaison montante suivant le premier ensemble de symboles de liaison montante.

12. Un appareil pour la communication sans fil, comprenant des moyens configurés pour exécuter le procédé (1400) selon l'une des revendications 1 à 11.

13. Un procédé (1600) de communication sans fil au niveau d'une station de base (115), comprenant :
la transmission (1605), à un équipement utilisateur, UE, d'un premier ensemble de transmissions de liaison descendante d'une première configuration de planification semi-persistante et d'un deuxième ensemble de transmissions de liaison descendante d'une deuxième configuration de planification semi-persistante, dans lequel un premier ensemble de bits de retour associés au premier ensemble de transmissions de liaison descendante et un deuxième ensemble de bits de retour associés au deuxième ensemble de transmissions de liaison descendante sont planifiés pour être transmis à la station de base (115) dans un premier ensemble de symboles de liaison montante ;
l'identification (1610), sur la base au moins en partie d'un changement de format associé au premier ensemble de symboles de liaison montante, qu'au moins une partie du premier ensemble de symboles de liaison montante n'est pas disponible pour la transmission du premier ensemble de bits de retour ;
la transmission, à l'UE (105), d'une indication d'un modèle de report de retour parmi un ensemble de modèles de report de retour candidats, dans lequel la transmission de l'indication du modèle de report de retour comprend en outre la transmission d'un identifiant qui est l'un parmi une pluralité d'identifiants, dans lequel la pluralité d'identifiants est indicative d'un ou plusieurs premiers modèles de report de retour qui définissent chacun des distributions correspondantes de bits de retour sur la pluralité de symboles de liaison montante suivant le premier ensemble de symboles de liaison montante, la pluralité d'identifiants étant également indicative d'un second modèle de report de retour qui définit l'inclusion de tous les bits de retour dans un deuxième ensemble de symboles de liaison montante suivant le premier ensemble de symboles de liaison montante ; et
la réception (1615), à partir de l'UE (105), du premier ensemble de bits de retour et du deuxième ensemble de bits de retour conformément au modèle de report de retour.

14. Un appareil pour des communications sans fil, comprenant des moyens configurés pour exécuter le procédé (1400) selon la revendication 13.

15. Un programme de calculateur comprenant des instructions de programme qui, lorsque le programme est exécuté par un calculateur, réalisent toutes les étapes du procédé (1400) selon l'une des revendications 1 à 11 ou 13.
